# EUROPEAN PATENT SPECIFICATION

(11) **EP 1 193 117 B1**
(45) Date of publication and mention of the grant of the patent: **07.12.2005**
(21) Application number: 01122675.0
(22) Date of filing: 28.09.2001
(51) Int. Cl.: B60N 2/58, B60N 2/72

(54) **Vehicle seat**
Fahrzeugsitz
Siège de véhicule

(30) Priority: 29.09.2000 JP 2000300193
(43) Date of publication of application: 03.04.2002
(73) Proprietor: Delta Tooling Co., Ltd., Hiroshima 736-0084 (JP)
(72) Inventor: Nishino, Masaki, Hiroshima-shi, Hiroshima 736-0084 (JP); Ogura, Yumi, Hiroshima-shi, Hiroshima 736-0084 (JP); Sezaki, Seiji, Hiroshima-shi, Hiroshima 736-0084 (JP); Ochiai, Naoki, Hiroshima-shi, Hiroshima 736-0084 (JP)
(74) Representative: HOFFMANN EITLE

(56) References cited:
- EP-A- 1 084 902
- DE-A- 2 030 717
- DE-A- 19 736 951
- FR-A- 1 254 499

## Description

### BACKGROUND OF THE INVENTION

The present invention relates to a vehicle seat for a car or the like.

In recent years, a known vehicle seat uses a net member of a three-dimensional structure which can provide a high cushioning ability even if it is a thin type and is excellent in air permeability because of a large number of air gaps as compared with a pad member such as urethane or the like. Its front mesh layer and back mesh layer are connected by a large number of piles to form a truss structure (three-dimensional structure), which is an elastic structure with resistance to settling and is excellent in air permeability, body pressure dispersion characteristics, impact absorbing characteristics and the like.

Though the vehicle seat using the net member of a three-dimensional structure has the above-described excellent characteristics, providing body pressure dispersion characteristics and impact absorbing characteristics at higher levels is always required. Further, it is also required to support the body of a seated person as stably as possible because if the seated person's body moves up and down due to vibrations or the like during driving, the above characteristics can not be exhibited effectively. Furthermore, since the net member of a three-dimensional structure can exhibit a cushioning ability, impact absorbing characteristics and the like at high levels as described above, one with a thin-profile can be used as compared with the pad member such as urethane or the like, but it is desired to decrease the feeling of touch with its seat frame to the minimum in order to improve the feeling of seating.

EP-A-1 084 902, which represents prior art under Art. 54(3) and (4) EPC (except for the Contracting State TR) and is thus only relevant with respect of novelty, discloses a vehicle seat which comprises a base member that is elastically connected to and supported on frame members through metal springs for absorbing vibrations coming from a vehicle floor, and thus constitutes a lower layer. The vehicle seat further comprises a first net member, in which a front mesh layer and a back mesh layer are connected by large number of piles, and which are stretched above the base member and between the frame members for providing a feeling of stiffness by its reaction force to stably hold a seated person, to constitute a middle layer. A second net member of a three-dimensional structure, in which a front mesh layer and a back mesh layer are connected by a large number of piles, is disposed to cover the top of the middle layer to constitute an upper layer.

### SUMMARY OF THE INVENTION

The present invention is made in view of the above-described circumstances and its object is to provide a vehicle seat capable of providing body pressure dispersion characteristics, impact absorbing characteristics and the like at levels higher than those of the conventional case. Further, another object is to provide a vehicle seat which can decrease the feeling of touch with its seat frame.

These objects are solved by the features of independent claim 1. Optional, or preferred embodiments are subject of dependent claims 2 to 14.

In order to attain the above objects, a vehicle seat in accordance with the present invention is characterized by having a base member elastically connected to and supported on any of frame members arranged separately in a width direction of a seat frame, through metal springs for absorbing vibrations coming from a vehicle floor, to constitute a lower layer; a first net member of a three-dimensional structure in which a front mesh layer and a back mesh layer are connected by a large number of piles, stretched above the base member and between the frame members for providing a feeling of stiffness by its reaction force to stably hold a seated person, to constitute a middle layer; and a second net member of a three-dimensional structure, in which a front mesh layer and a back mesh layer are connected by a large number of piles, disposed to cover the top of the middle layer and stretched with a tension lower than that of the first net member constituting the middle layer for accommodating the weight of a person to be seated, to constitute an upper layer.

According to further embodiments of the invention :
- the base member is located between frame members constituting a seat cushion part which are arranged separately in the width direction of the seat frame, and the metal spring runs between each frame member and each side portion of the base member.
- the base member is further elastically supported hung through a metal spring engaged with any of frame members constituting a seat back part of the seat frame.
- the base member is connected to means for preventing bounce upward.
- the base member is a substantially flat-type elastic member.
- the substantially flat-type elastic member constituting the base member is a net member of a three-dimensional structure in which a front mesh layer and a back mesh layer are connected by a large number of piles.
- the first net member constituting the middle layer is stretched in loop form between the frame members arranged separately in the width direction.
- a viscoelastic member is inserted between a part of the first net member constituting the middle layer covering the frame member and the second net member constituting the upper layer, or between the first net member constituting the middle layer and the frame member around which the first net member is wound.
- the viscoelastic member is formed into a structure having a plurality of divided block parts with one or more boundary parts, which are processed thin in thickness, intervening therebetween.
- the viscoelastic member is formed including viscoelastic polyurethane, or is formed including a net member of a three-dimensional structure, in which a front mesh layer and a back mesh layer are connected by a large number of piles, formed into a structure having a plurality of divided block parts with one or more boundary parts, which are processed thin in thickness, intervening therebetween.
- the viscoelastic member is formed including a net member of a three-dimensional structure, in which a front mesh layer and a back mesh layer are connected by a large number of piles, formed into a structure having a plurality of divided block parts with one or more boundary parts, which are processed thin in thickness, intervening therebetween, and viscoelastic polyurethane which is integrally joined to one face of the net member of a three-dimensional structure.
- the viscoelastic member is formed including a net member of a three-dimensional structure, in which a front mesh layer and a back mesh layer are connected by a large number of piles, formed into a structure having a plurality of divided block parts with one or more boundary parts, which are processed thin in thickness, intervening therebetween, and an elastic base member to either face of which the net member of a three-dimensional structure is integrally joined.
- a viscoelastic member which is connected to and supported on any of the frame members forming the seat frame is further disposed at one or both of a front edge portion of the seat cushion part and a lumbar supporting part and below the second net member forming the upper layer.
- only one end of the viscoelastic member disposed on the front edge portion of the seat cushion part is connected to and supported on any of the frame members disposed at the front end of the seat frame for the seat cushion part.

### BRIEF DESCRIPTION OF THE DRAWINGS

FIG. 1 is a partially cross-sectional view showing a schematic structure of a vehicle seat according to one embodiment of the present invention;
FIG. 2 is a perspective view for explaining a seat frame of the vehicle seat according to the above embodiment;
FIG. 3 is a cross-sectional view for explaining a structure of an aspect of a seat cushion part of the vehicle seat according to the above embodiment;
FIGS. 4A and 4B are cross-sectional views for explaining a structure of another aspect of the seat cushion part of the vehicle seat according to the above embodiment;
FIG. 5 is a cross-sectional view for explaining a structure of a seat back part of the vehicle seat according to the above embodiment;
FIG. 6 is a perspective view for explaining a base member constituting the seat cushion part and a back lining net member constituting the seat back part of the vehicle seat according to the above embodiment;
FIG. 7A is an enlarged view of A part in FIG. 6 and FIG. 7B is a view showing an aspect in which an iron plate is interposed;
FIG. 8 is an enlarged view of C part in FIG. 6;
FIG. 9 is an enlarged view of B part in FIG. 6;
FIGS. 10A to 10C are views for explaining structures of a viscoelastic member;
FIG. 11 is a view for explaining a structure in which the viscoelastic member is disposed at a lumbar supporting part;
FIG. 12 is a cross-sectional view showing a part of a net member of a three-dimensional structure used in the above-described embodiment;
FIG. 13 is an enlarged view showing a front mesh layer of the net member shown in FIG. 12;
FIG. 14 is an enlarged view showing a back mesh layer of the net member shown in FIG. 12;
FIGS. 15A to 15E are views for explaining manners of arranging piles;
FIG. 16 is a perspective view for explaining another embodiment of the base member;
FIG. 17 is a perspective view for explaining another embodiment of the base member;
FIG. 18 is a perspective view for explaining another embodiment of the base member;
FIG. 19 is a perspective view for explaining another embodiment of the base member;
FIG. 20 is a perspective view for explaining another embodiment of the base member;
FIG. 21A is a graph of load-deflection curved lines showing static characteristics when a load is applied using a compressed plate in the shape of the haunches, and FIG. 21B is a view for explaining components;
FIG. 22 is a view showing measured results of vibration transmissibility;
FIGS. 23A and 23B are views for explaining vibration absorbing characteristics of the seat cushion part;
FIGS. 24A and 24B are views for explaining vibration absorbing characteristics of the seat back part and the seat cushion part in an embodiment 1;
FIGS. 25A and 25B are views for explaining vibration absorbing characteristics of the seat back part and the seat cushion part of an urethane seat that is a comparative example 4;
FIG. 26 is a view showing data of the embodiment 1 in FIG. 24 through the relation between cycle and acceleration;
FIG. 27 is a view showing data of the comparative example 4 in FIG. 25 through the relation between cycle and acceleration;
FIG. 28 is a graph showing results of vibration characteristics investigated by vibrating a seat by means of a vibrator based on random waves taken on Chugoku Expressway and mounting an accelerometer on the head of a test subject; and
FIG. 29 a graph showing results of the same experiment as in the case of FIG. 28 which was carried out based on random waves taken on Metropolitan Expressway.

### DETAILED DESCRIPTION OF THE PREFERRED EMBODIMENTS

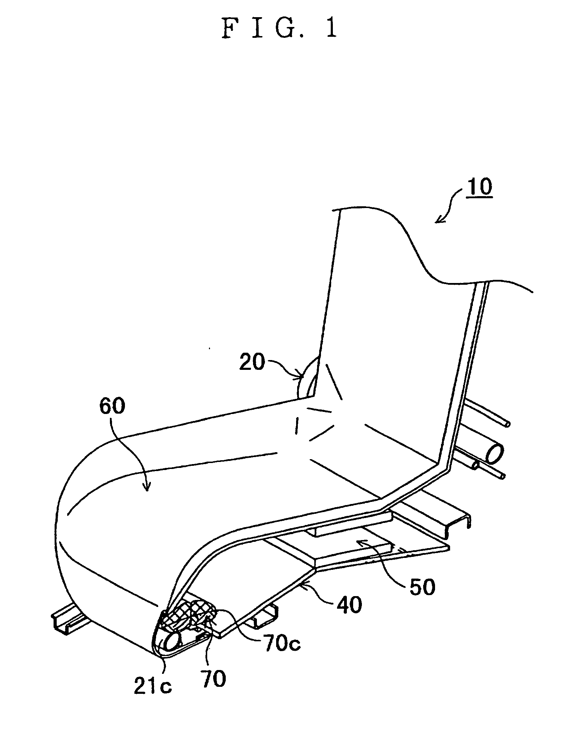

Hereinafter, the present invention is explained in more detail based on the embodiments shown in the drawings. First, referring to FIG. 1 to FIG. 11, the structure of a vehicle seat 10 according to the embodiment is explained. As shown in FIG. 1, the vehicle seat 10 comprises a seat frame 20, a base member 40, a first net member 50, and a second net member 60.

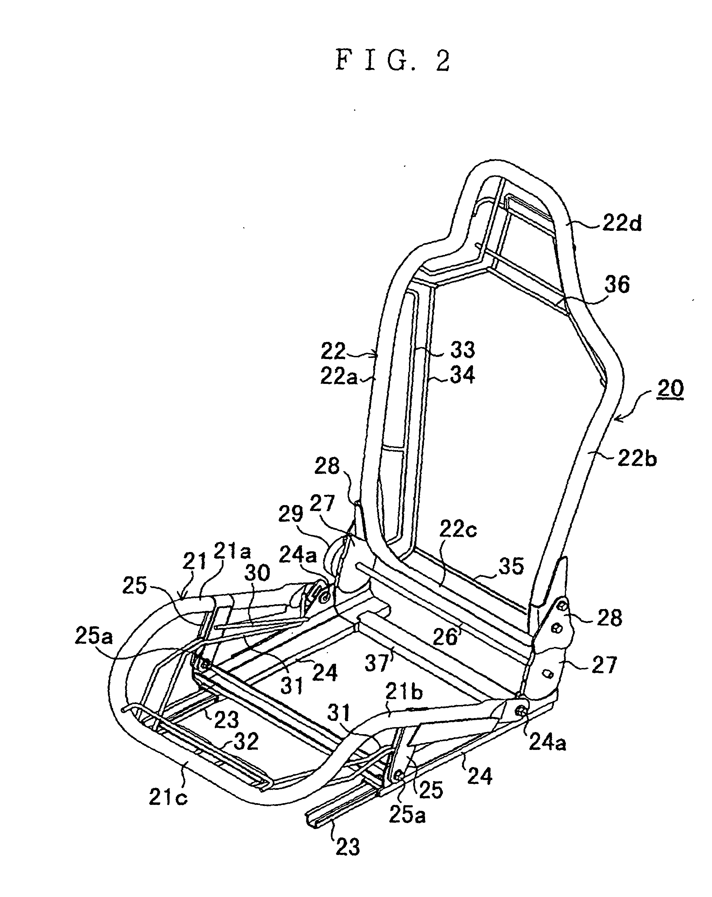

The seat frame 20, as shown in FIG. 2, comprises a cushion main frame 21 for forming a seat cushion part and a back main frame 22 for forming a seat back part. Each of them is composed of a frame member in the form of pipe, and this frame member of the cushion main frame 21 is bent into substantially the shape of the letter U so that its closed side is disposed at the front. The frame member of the back main frame 22 is bent into a substantially square shape and to form a head supporting frame part 22d with a small width at the top.

Base ends of the cushion main frame 21 are connected, with bolts 24a, to slide frames 24 which slide along rail members 23 disposed at the floor of a vehicle. Further, middle parts of side frame members 21a and 21b, which are provided at positions separated from each other in the width direction of the cushion main frame 21, are also connected to the slide frames 24 with first brackets 25 and bolts 25a. Accordingly, the cushion main frame 21 is provided to be slidable along the rail members 23.

At the rear ends of the slide frames 24, second brackets 27 are provided to be rotatable through a shaft 26, and third brackets 28 which are provided at the bottom ends of the back main frame 22 are connected fixedly to the second brackets 27. Numeral 29 denotes a reclining dial, and rotation of the reclining dial 29 causes the back main frame 22 to recline back and forth with respect to the cushion main frame 21.

Below each of the side frame members 21a and 21b of the cushion main frame 21, provided are a first auxiliary frame member 30 and a second auxiliary frame member 31 whose base ends are fixed to the slide frame 24 respectively and the other end of the former is fixed to the first bracket 25 and the other end of the latter is fixed to a front end frame member 21c of the cushion main frame 21. Further, each end portion of a third auxiliary frame member 32 which is formed in substantially the shape of the letter U is fixed to the front end frame member 21 c.

Further, auxiliary frame members 33 and 34 are provided to be located behind each of the side frame members 22a and 22b of the back main frame 22 and inside either the side frame members 22a or 22b viewed from the front.

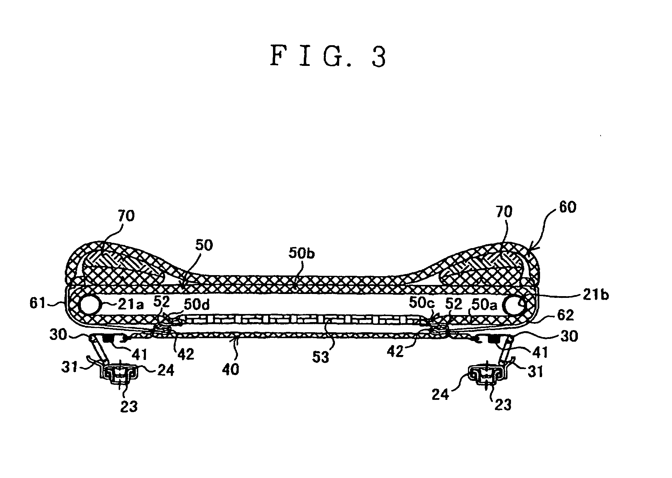

The base member 40 which is disposed below the first net member 50 and the second net member 60 and constitutes a lower layer is elastically connected to and supported on, through metal springs 41, any of the frame members which are disposed separately from each other in the width direction from among the frame members constituting the seat cushion part. In this embodiment, as shown in FIG. 3, FIG. 4 and FIG. 6, ends of the metal springs 41 are disposed to be engaged with the first auxiliary frame members 30 and 30 disposed below the side frame members 21a and 21 b respectively, and a rim portion of the base member 40 is engaged with the other ends thereof, thereby stretching the base member 40 between the first auxiliary frame members 30 and 30 which are disposed separately in the width direction. Further, the front end of the base member 40 is supported on the third auxiliary frame member 32 which is fixed to the front end frame member 21c of the cushion main frame 21.

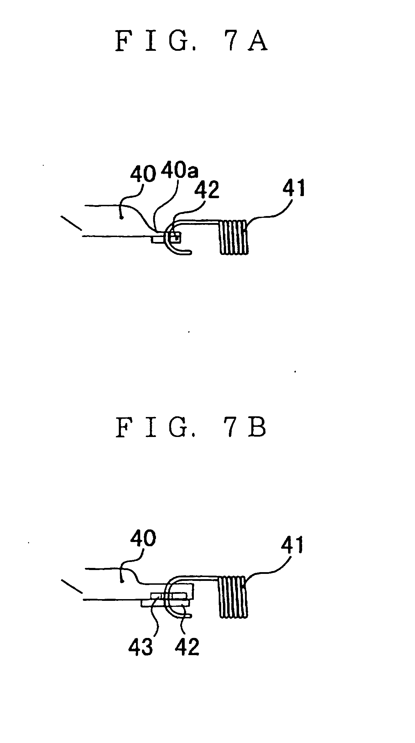

The reason why the base member 40 is elastically connected and supported through the metal springs 41 as described above is that the base member 40 is stroked by vibrations to absorb vibrations transmitted to the first net member 50 and the second net member 60 disposed at upper layers utilizing phase delay. The material forming the base member 40 is not limited, but it is preferable that, in addition to absorption of vibrations by strokes of the metal springs 41, the base member 40 itself is a substantially flat-type elastic member which absorbs vibrations and hardly transmits them. As the above-described base member 40, for example, a so-called Pullmaflex can be used in which wires are formed in reed screen form or in net form, but it is preferable to use the same net member of a three-dimensional structure as that of the first net member 50 and the second net member 60 described below. As shown in FIG. 7A, when the net member of a three-dimensional structure is used, a plastic plate 42 is secured to one surface of a rim portion 40a by vibration welding, and the other end of the metal spring 41 penetrates through the plastic plate 42 for engagement. In order to prevent the rim portion 40a from being damaged by pull due to pressure exerted on the surface, it is also possible to interpose an iron piece 43 between the rim portion 40a and the plastic plate 42 as shown in FIG. 7B. In place of the plastic plate 42, a metallic wire can be inserted.

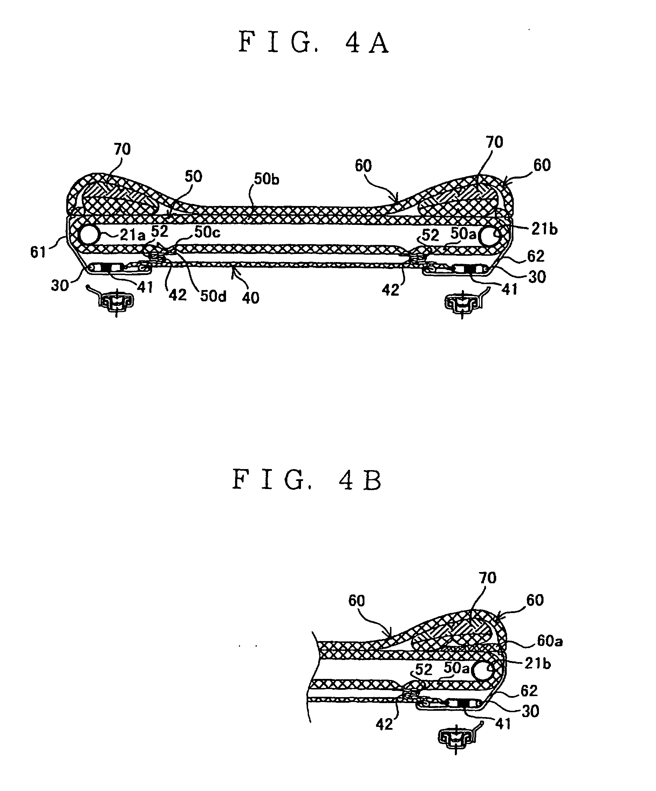

The first net member 50 is disposed above the base member 40 to constitute a middle layer. The first net member 50 is stretched between any frame members, which are disposed separately in the width direction, of the seat frame 20 constituting the seat cushion part with a tension higher than that of the second net member 60 described below when stretched. In the embodiment, as shown in FIG. 3 and FIG. 4, it is stretched between the side frame members 21a and 21 b of the seat frame 20 which are located above the first auxiliary frame members 30 and 30 stretching the aforementioned base member 40 therebetween. The frame members applicable for the stretch are not limited to the side frame members 21a and 21b constituting the side frame 21, but the stretch can also be made between separately provided auxiliary frame members (not shown). However, the first net member 50 is spread between the side frame members 21a and 21b, whereby the surfaces of the side frame members 21a and 21b are also covered with the first net member 50, which serves to decrease the feeling of touch with the side frame members 21a and 21b.

The reason why the first net member 50 is stretched with a high tension as described above is that when a person sits on the second net member 60 which is disposed thereabove, the first net member 50 provides a feeling of stiffness by its reaction force to stably hold the seated person. Further, the first net member 50 is connected to the aforementioned base member 40 so as to increase face stiffness of the lower part to cope with deformation of the upper part while the base member 40, which is stretched between the first auxiliary frame members 30 and 30 through the metal springs 41, exhibits high vibration absorbency, resultingly providing a feeling of stiffness to improve the feeling of seating.

Means for stretching the first net member 50 between the side frame members 21a and 21b is optional. Though the first net member 50 can be stretched in plate shape by winding its rim portion around the side frame members 21a and 21b, it is preferable to stretch it in loop shape between the side frame members 21a and 21b as shown in FIG. 3 and FIG. 4. When the first net member 50 is formed in loop shape and the base member 40 is connected to a part 50a located at the lower side, the second net member 60 is disposed on a part 50b located at the upper side, so that transmission of vibrations to the second net member 60 is decreased as compared with the case where the first member 50 is stretched in plate shape to be connected to the base member 40. Further, a space which is formed between the part 50a located at the lower side and the part 50b located at the upper side can provide a feeling of stroke. Furthermore, because of the loop shape, characteristics of the net can be utilized in the three dimensions to make it possible to design four spring constants (selection of characteristic of the part 50b located at the upper side or the first net member 50, selection of characteristic of a connecting net 53 described below, selection of characteristics of the first net member 50 and the connecting net 53 in accordance with magnitude of load, metal spring characteristic) by compression (buckling) characteristics, tensile characteristics, and metal spring characteristics, whereby linearity can be reinforced, and amplitude, frequency, or transfer function independent from load mass can be designed.

Though a connecting means between the first net member 50 and the base member 40 is optional, they are connected in this embodiment by fixing substantially U-shaped plates 52 and 42 to the back face of the part 50a, which is located at the lower side of the first net member 50 stretched in loop shape, and to the top face of the base member 40 respectively with the plates 52 and 42 disposed in opposite directions to each other, and engaging both plates 52 and 42. Means for fixing the U-shaped plates 52 and 42 to the first net member 50 or the base member 40 is optional, and, for example, small holes are provided in the plates 52 and 42, making it possible to fix them by sewing even if the plates 52 and 42 are made of plastic or metal. Further, in the case of plastic, a vibration welding means can be employed.

To stretch the first net member 50 in loop shape between the side frame members 21a and 21b, as shown in FIG. 4, the first net member 50 is previously formed to have a length to the extent that its edges 50c and 50d overlap when it is wound around the side frame members 21a and 21b to be formed in loop shape, and the overlapping edges 50c and 50d are fixed to each other. Fixing means in this event may be a vibration welding means or a sewing means. In the case of sewing, they can be sewed together with the aforementioned substantially U-shaped plate 52.

Further, as the aspect shown in FIG. 3, it is also possible that the first net member 50 is formed to have a length shorter than that of the above-described aspect shown in FIG. 4, and the connecting net 53 is provided between the edges 50c and 50d by the vibration welding means or the sewing means. The connecting net 53 is provided to be located at the lower side when the first net member 50 is stretched in loop shape between the side frame members 21a and 21b. Since the connecting net 53 does not perform a function of supporting a load but is used to stretch the first net member 50 with a high tension, a function necessary to support a load is not essential for it, and thus a connecting net with a relatively low elasticity is used therefor.

The second net member 60 is disposed above the first net member 50 to constitute the upper layer. The second net member 60 is provided with trim cloths 61 and 62 at the ends. In the aspect shown in FIG. 4A, the trim cloths 61 and 62 are passed around the peripheral faces of the first net member 50 which are disposed around the side frame members 21a and 21b, further wound around the first auxiliary frame members 30 and 30 disposed below the side frame members 21a and 21b to be folded inward, and sewed to the base member 40, thereby stretching the second net member 60 between the side frame members 21 a and 21b. The tensile force in this case is set to be lower than that of the first net member 50, so that when a person sits thereon, the second net member 60 bends along the shape of the human body to contact with the first net member 50. Accordingly, the second net member 60 and the first net member 50 exhibit their own body weight pressure dispersion characteristics and vibration absorbing characteristics. The first net member 50 is stretched with a high tension to prevent unintended sinking and support the second net member 60, whereby a feeling of stiffness of the first net member 50 is transmitted through the second net member 60 to the seated person. Further, the second net member 60 is loosely stretched, which does not interfere with the mechanism of absorbing vibrations by means of the metal springs 41, the base member 40, the first net member 50 and the connecting net 53. If the second net member 60 is tightly stretched, movements of the connecting net 53 and the metal springs 41 are suppressed, making it difficult to generate movement by resilience of the metal springs 41. More specifically, the second net member 60 and the first net member 50 are necessarily set in the stretching way as described above not to prevent such movements that the metal springs 41 do not actively work in a static seating condition but function with phase delay when an impact vibration or a force due to a great displacement exerts thereon.

The stretching means for the second net member 60 is not limited to the above-described means, but the second net member 60 can be stretched, as shown in FIG. 3, by means such as sewing of the ends of the trim cloths 61 and 62, together with the base member 40, to the plates 42 fixed to the base member 40.

Further, it is preferable to dispose viscoelastic members 70, as shown in the drawings, between the first net member 50 and the second net member 60 and close to the side frame members 21a and 21b respectively. The provision of the viscoelastic members 70 makes it possible to absorb vibrations transmitted along the side frame members 21a and 21b also by the viscoelastic members 70, and decrease the feeling of touch with the side frame members 21a and 21b, resulting in improved feeling of support of femurs. When a rim portion 60a of the second net member 60 is disposed to be inserted between the viscoelastic member 70 and the second net member 60 as shown in FIG. 4B, the feeling of touch with each of the side frame members 21a and 21 b can be decreased more.

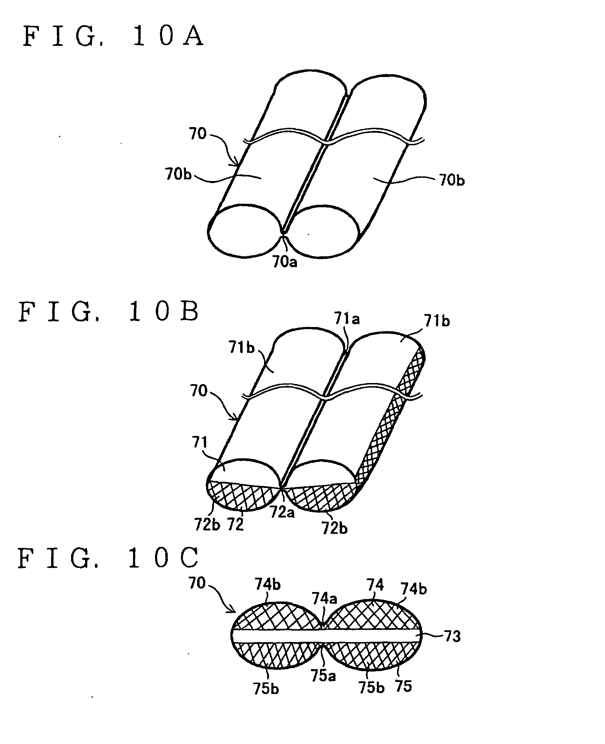

Viscoelastic polyurethane can be used as the viscoelastic member 70. The viscoelastic member 70 which is processed into substantially cylindrical form can be used as it is. However, in order to impart a property of keeping shape by resilience and face stiffness to the viscoelastic material with high damping property, it is preferable to form at predetermined intervals a boundary part 70a which is processed to become smaller in thickness and form block parts 70b and 70b each having a shape whose middle portion bulges out as shown in FIG. 10A. In the case of the structure composed of viscoelastic polyurethane, however, a heat welding means is used to form the boundary part 70a, in which the size and shape of the block parts 70b and 70b can be changed through setting of the number of formation, width and the like of the boundary parts 70a to arbitrarily adjust the face stiffness.

Further, as the viscoelastic member 70 with a high contribution ratio to damping characteristics, it is preferable to use a viscoelastic member made by integrally joining viscoelastic polyurethane 71 and a net member of a three-dimensional structure 72 as shown in FIG. 10B in order to impart a spring property thereto in a direction perpendicular to a human body to improve vibration absorbency. Also in this case, it is preferable that the viscoelastic polyurethane 71 and the net member of a three-dimensional structure 72 are respectively formed with boundary parts 71 a and 72a, which are processed to become smaller in thickness, to be in shapes having block parts 71b and 72b which bulge out with the boundary parts 71a and 72a as boundaries.

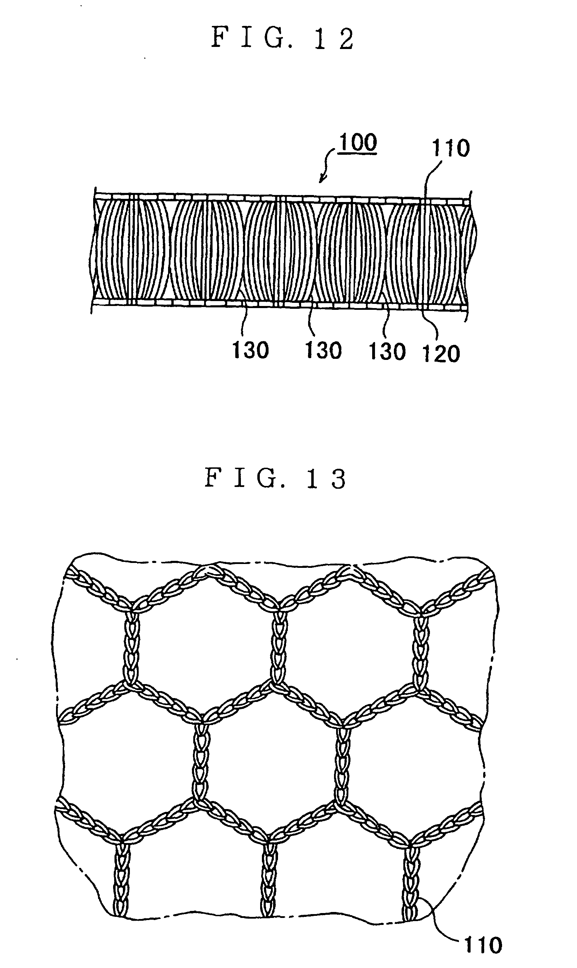

Further, in order to make the viscoelastic member 70 at lower cost, different kinds of elastic members which are available at low prices are combined to make the viscoelastic member 70 which has both spring characteristics and damping characteristics as shown in a cross-sectional view of FIG. 10C. The viscoelastic member 70 shown in FIG. 10C is made by integrally joining net layers 74 and 75, which are each composed of a net member of a three-dimensional structure as shown in FIG. 12 to FIG. 15, to both surfaces of an elastic base member 73 disposed therebetween.

As the elastic base member 73, it is preferable to use foamed polyurethane which is formed in an appropriate thickness. The net layers 74 and 75 joined to both surfaces of the elastic base member 73 are formed with boundary parts 74a and 75a respectively at predetermined intervals and with block parts 74b and 75b with the boundary parts 74a and 75b as boundaries.

Incidentally, means for forming the boundary parts 74a and 75a are optional. For example, means for sewing can be suggested in which after net members constituting the net layers 74 and 75 are layered on the elastic base member 73, sewing is performed from one net layer 74 through the elastic base member 73 to the other net layer 75 along parts corresponding to the boundary parts 74a and 75a. Further it is also possible that after the net members constituting the net layers 74 and 75 are layered on the elastic base member 73, they are sandwiched between protruding parts of dies for vibration welding (not shown) to integrally join those three members by vibration welding. Further, it is also possible that a net member of a three-dimensional structure which is reinforced in buckling characteristics is used for the viscoelastic member 70 to provide pseudo-viscoelastic characteristics only from the net member of a three-dimensional structure. For example, it is possible to make a structure in which the net member of a three-dimensional structure in the form of an entirely flat plate is used as the above-described elastic base member 73, and the aforementioned net layers 74 and 75 are layered on both sides thereof. Furthermore, it is also possible to make a structure in which the above net layers 74 and 75 are directly layered without the elastic base member 73 intervening.

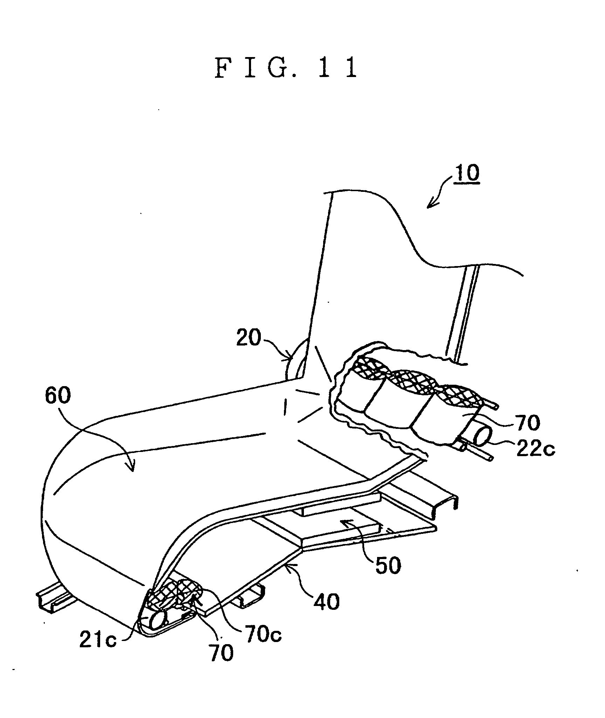

It is preferable to securely dispose the viscoelastic member 70 with one end thereof sandwiched also between the front end frame member 21c which is disposed at the front end of the substantially U-shaped cushion main frame 21 of the seat cushion part and the above-described second net member 60 as shown in FIG. 1 and FIG. 11. In this case, it is preferable to secure only one end of the viscoelastic member 70 to the front end frame member 21c and dispose the other end 70c as a free end in a space between the second net member 60 and the base member 40.

Vibrations transmitted through the front end frame member 21c of the cushion main frame 21 are absorbed by the viscoelastic member 70 which is connected to and supported on the front end frame member 21c, thereby suppressing transmission of vibrations to the second net member 60. Further, the other end of the viscoelastic member 70 is kept to be a free end, thereby making it easier for absorbed vibration energy to disperse and easing rapid change in section modulus, which results in decreased feeling of foreign matter caused by the viscoelastic member 70 itself. Further, since the positions of back of thighs of the seated person are raised by the thickness of the viscoelastic member 70, the stability during seating is improved and the feeling of touch with the front end frame member 21c of the side frame 21 is decreased, preventing the haunches from slipping due to turn of the pelvis of the seated person.

As the viscoelastic member 70 which is connected to and supported on the front end frame member 21c, any of viscoelastic polyurethane, a member made by layering the viscoelastic polyurethane 71 and the net member of a three-dimensional structure 72, and a member made by integrally joining the net layers 74 and 75 on both surfaces of the elastic base member 73 can be used similarly to the viscoelastic member 70 mounted on the side frame members 21a and 21b. Moreover, it is preferable that boundary parts are formed in the above members to provide a structure having a plurality of blocks in order to impart predetermined face stiffness thereto, which is also the same as the above description.

It is preferable to dispose further the viscoelastic member 70 also at a lumbar supporting part as shown in FIG. 11. The lumbar supporting part is provided close to the bottom of the side frame members 22a and 22b of the back main frame 22 constituting the seat back part, that is, in the vicinity of a lower frame member 22c. The usable material and structure for the viscoelastic member 70 are completely the same as those of the above-described case, and, for example, as shown in FIG. 11, a member having a form which is divided in three block parts can be used.

The viscoelastic member 70 as described above is provided at the lumbar supporting part, whereby vibrations transmitted through the side frame members 22a and 22b and the lower frame member 22c of the back main frame 22 can be absorbed. Further, the lumbar supporting part of the seat back part decreases reaction force by the viscoelastic member 70 to bulge out forward along the shape of the human body, resulting in improved supporting property for the lumbar.

It should be noted that even if only one of the viscoelastic member 70 connected to the front end frame member 21 c of the cushion main frame 21 and the viscoelastic member 70 provided at the lumbar supporting part is provided, vibration absorbing characteristics and the stability during seating can be improved, but they are preferably provided at both positions in order to improve their characteristics more.

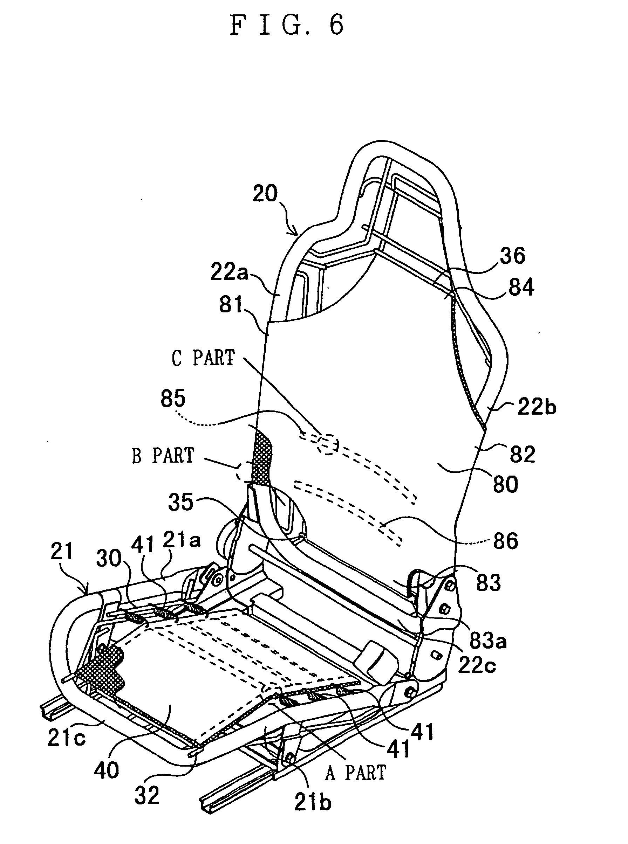

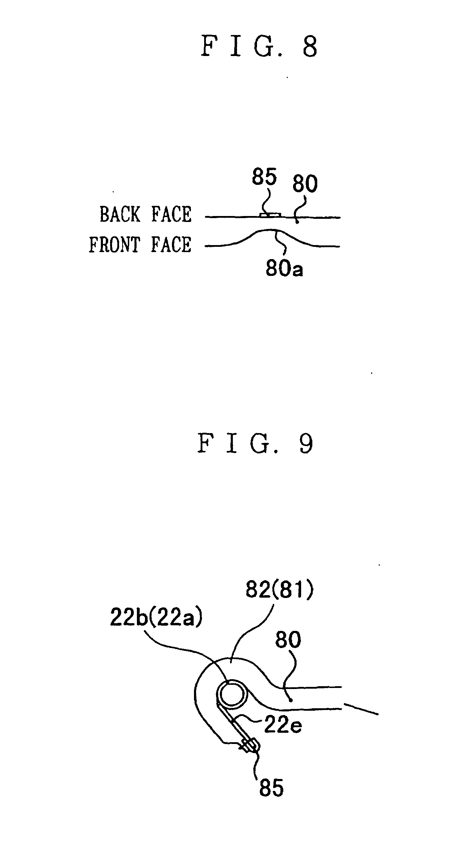

As shown in FIG. 6, a back lining net member 80 whose rim portions 81 and 82 are connected to the side frame members 22a and 22b respectively is stretched over the back main frame 22. Specifically, as shown in FIG. 9, the rim portions 81 and 82 are wound from the front side of the side frame members 22a and 22b toward the back side respectively. U-shaped plates 85 which are fixed to the edges of the rim portions 81 and 82 by vibration welding or sewing are engaged with attachment plates 22e which protrude backward from the side frame members 22a and 22b, thereby stretching the back lining net member 80. A U-shaped plate 83a is fixed by vibration welding to the edge of a lower rim portion 83 of the back lining net member 80, and this U-shaped plate 83a is engaged with an auxiliary frame member 35 which is disposed behind the lower frame member 22c of the back main frame 22. Further, a U-shaped plate not shown is attached by vibration welding to the edge of an upper rim portion 84 of the back lining net member 80. This U-shaped plate is engaged with an auxiliary frame member 36 which is disposed behind the back main frame member 22 in the vicinity of the boundary with the head supporting frame part 22d of the back main frame 22.

The back lining net member 80 is constituted of a net member of a three-dimensional structure and stretched with substantially the same high tension as that of the above-described first net member 50 which is stretched over the cushion main frame 21, so that when the load of the seated person exerts on the back lining net member 80 through a skin member covering it, the back lining net member 80 provides feelings of spring and stiffness by its resilience to stably hold the seated person and absorb vibrations.

On the back lining net member 80, as shown in FIG. 6 and FIG. 8, plastic plates 85 and 86 are fixed on the back face side at the positions corresponding to the lumbar of the person during seating by vibration welding to extend in the lateral direction. Because they are fixed by vibration welding, the opposite faces to the fixed faces of the plates 85 and 86 on the back lining net member 80, that is, the front faces, are formed with concave portions 80a which correspond to the shapes of the plates 85 and 86 as shown in FIG. 8. The concave portions 80a are provided, thereby making it possible to adjust the stretching degree of the skin member layered on the back lining net member 80. More specifically, when the skin member is stretched over the back main frame 22, tension concentrating on the edges is dispersed around the concave portions 80a, which makes it possible to partially form parts with high stiffness, thereby providing variations in pressure for supporting attitude and easing touch of the edges of the skin member. Incidentally, the concave portions 80a can be arbitrarily changed in the number of formation, width, length and the like by the material, thickness and the like of the net.

The skin member layered on the back lining net member 80 is composed of the net member of a three-dimensional structure similarly to the above-described second net member 60 which is the skin member stretched over the cushion main frame 21. This skin member can be composed of a different member from the above-described second net member 60 to be stretched over the back main frame 22 in an individual state. In this embodiment, however, the above-described second net member 60 is, as shown in FIG. 1, formed into one-piece structure which serves as both the skin member for the seat cushion part and the skin member for the seat back part to be stretched thereover. When the skin member is formed into the one-piece structure as described above, the stiff feeling of touch with the frame member located at the boundary between the seat back part and the seat cushion part can be eliminated to improve the feeling of seating.

It should be noted that the tension at a part corresponding to the skin member of the seat back part of the second net member 60 is set to be lower than that of the back lining net member 80. As a result, when a person sits thereon, the part corresponding to the skin member of the seat back part of the second net member 60 bends along the shape of the human body to contact with the back lining net member 80. Accordingly, the second net member 60 and the back lining net member 80 exhibit their own body weight pressure dispersion characteristics and vibration absorbing characteristics. The back lining net member 80 is stretched with a high tension to prevent unintended sinking and support the second net member 60, whereby the feeling of stiffness of the back lining net member 80 is transmitted through the second net member 60 to the seated person, and the second net member 60 is loosely stretched, which does not interfere with the effects of absorbing vibrations by means of the back lining net member 80. Further, even when inertial force is inputted by pitching, yawing, or rolling, the inertial force can be absorbed by a follow-up property of the second net member 60 having a low surface tension.

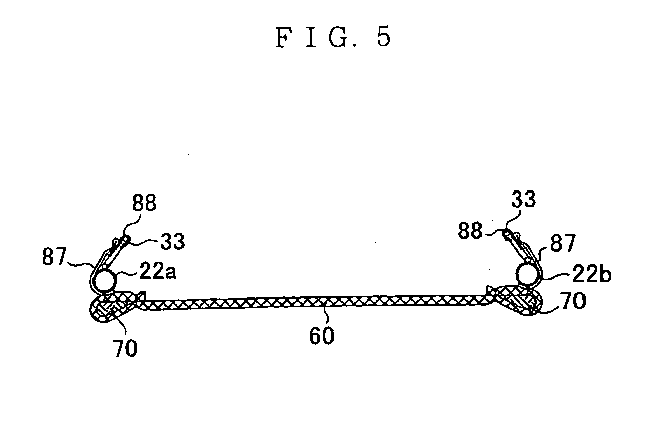

The second net member 60 which is provided at a part corresponding to the skin member of the seat back part is folded inward at both rims as shown in FIG. 5 to hold the viscoelastic members 70 therein in order to decrease the feeling of touch with the side frame members 22a and 22b. Further, a trim cloth 87 is provided at each rim, and a U-shaped plate 88 attached on the trim cloth 87 is disposed to be engaged with the auxiliary frame member 34, thereby stretching the second net member 60.

Next, the structure of a net member 100 of a three-dimensional structure which is employed as the above-described base member 40, first net member 50, second net member 60, and back lining net member 80 is explained with reference to FIG. 12 to FIG. 15. The net member 100 is, as shown in FIG. 12, formed in a solid truss structure (three-dimensional structure) having a front mesh layer 110, a back mesh layer 120, and a large number of piles 130 connecting the front mesh layer 110 and the back mesh layer 120.

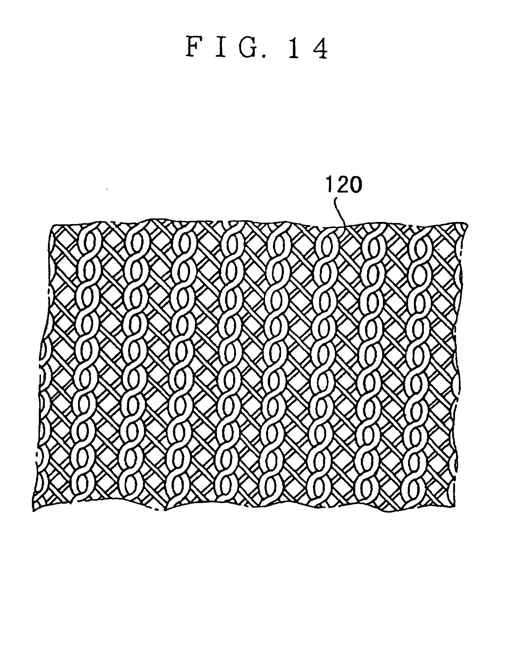

The front mesh layer 110 is formed in a structure having, for example, a honeycombed (hexagonal) mesh made from multifilaments composed of stranded monofilaments, as shown in FIG. 13. The back mesh layer 120 is formed, for example, by rib knitting multifilaments composed of stranded monofilaments, as shown in FIG. 14, into a structure having a smaller mesh (fine mesh) than the honeycombed mesh of the front mesh layer 110. The pile 130 is formed of monofilaments or multifilaments which are knitted between the front mesh layer 110 and the back mesh layer 120 so that the front mesh layer 110 and the back mesh layer 120 maintain a predetermined space therebetween, thereby imparting a predetermined stiffness to the net member 100 which is now a solid mesh knit. Incidentally, when the word "fiber" is simply used in this description, it means including spun yarn or the like as well as a monofilament and a multifilament.

In addition, though in the above explanation, a layer having a honeycombed mesh is defined as the front face (for example, a surface of the seat cushion part and the seat back part in contact with the human body), it is acceptable to use the above layer as the back face, and a layer having a small mesh as the front face. It is naturally acceptable to adopt a mesh shape other than the honeycombed shape or the fine mesh shape as the structure of the mesh layer, as shown in Table 1 shown below.

As a material to compose the front mesh layer 110, the back mesh layer 120 or the pile 130, a thermoplastic resin is preferable. The following resins can be used, for example, thermoplastic polyester resins such as polyethylene terephthalate (PET) and polybutylene terephthalate (PBT), polyamide resins such as nylon 6 and nylon 66, polyolefin resins such as polyethylene and polypropylene, or a mixed resin containing two or more kinds of these resins.

The thickness of a fiber composing the pile 130 should be, for example, 380 d or more, preferably 600 d or more. As a result, the load generated by the seated person can be supported by deformation of the mesh composing the respective mesh layers 110 and 120, and falling and buckling characteristics of the pile 130, and resilience of the adjacent piles 130 which impart spring characteristics to the buckling characteristics, that is, it can be supported by the buckling characteristics with resilience, so that the seat can be of a soft structure without concentration of stress.

Several characteristics of the net member 100 which is suitable to be used as the base member 40, the first net member 50, and the second net member 60 are exemplified in Table 1.

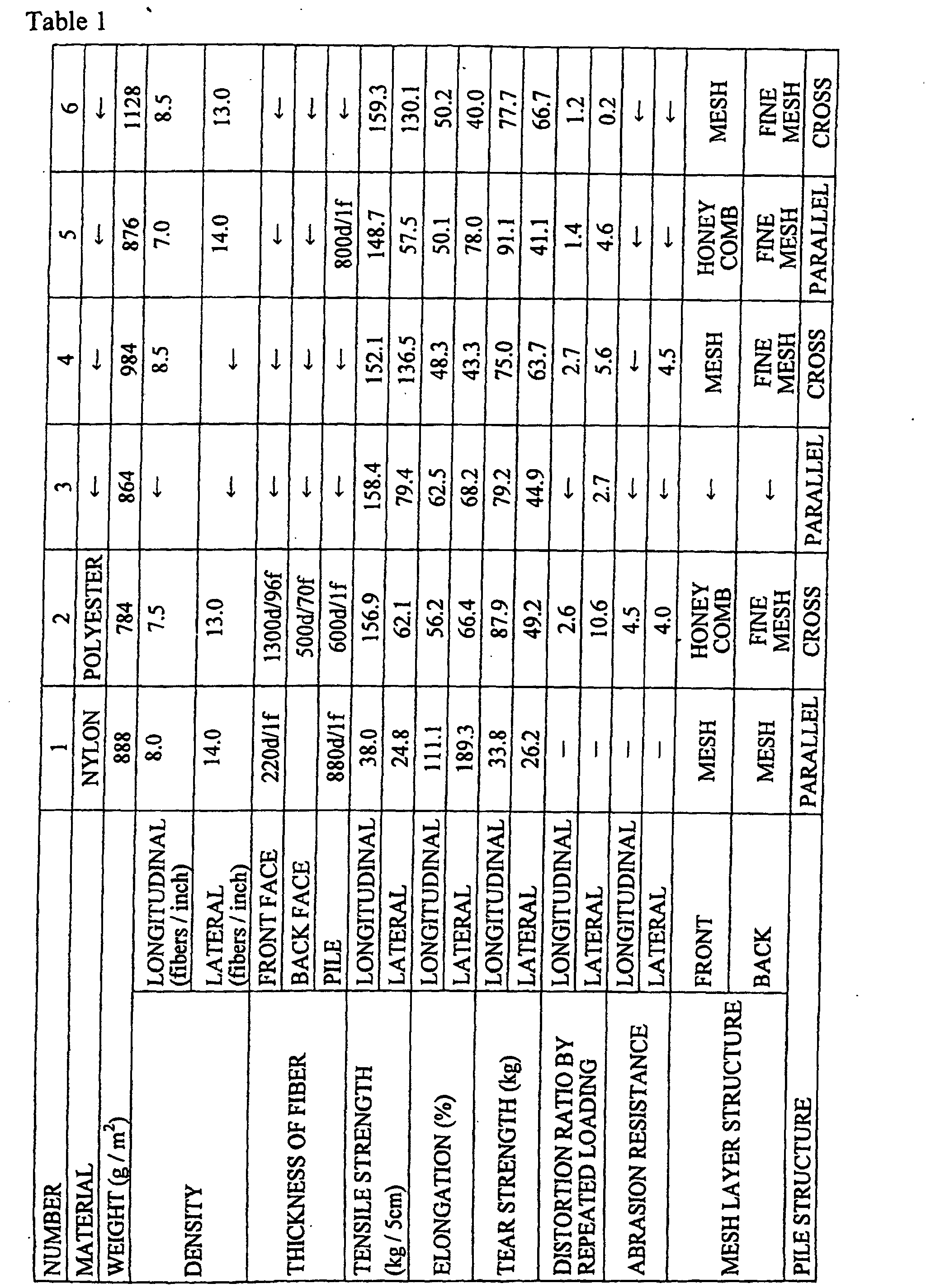

In Table 1, "d" indicates "denier" and "1 d" is a unit of thickness when one gram of fiber is pulled 9,000 m. For example, "220 d" means the fiber having a thickness obtained by pulling one gram of the fiber 9,000/220 = 40.9 m. The symbol "f" means "filament" which is a unit for expressing the number of monofilaments. For example, "70 f" means that one multifilament is composed of 70 monofilaments. An expression "kg/5 cm" used for tensile strength is the strength required to pull a test piece of 5 cm width. An expression "parallel" used for the pile structure means a state that the piles 130 connecting the front mesh layer 110 and the back mesh layer 120 do not cross each other viewed from a side, while "cross" means a state that the piles cross each other viewed from a side.

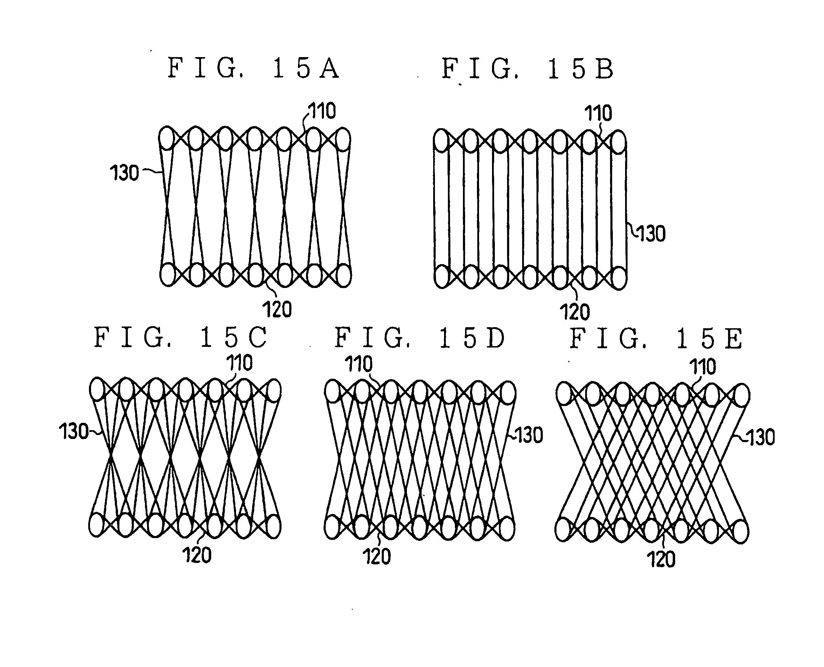

As a manner of disposing the piles 130 (pile structure), it can be classified by a state of the piles 130 connecting the front mesh layer 110 and the back mesh layer 120 viewed from the pile side, and, more concretely, it can be classified, for example, into the following types shown in FIGS. 15. FIG. 15A and FIG. 15B show straight types in which the piles 130 are disposed between respective multifilaments composing the front mesh layer 110 and respective opposing multifilaments composing the back mesh layer 120, in which FIG. 15A shows a straight type knitted in the shape of the figure "8", while FIG. 15B shows a straight type simply knitted straight. From FIG. 15C to FIG. 15E show cross types in which the piles 130 are knitted in such a manner that the piles 130 cross each other at the halfway between respective adjacent multifilaments of the front mesh layer 110 and respective adjacent multifilaments of the back mesh layer 120. Among them, FIG. 15C shows a type in which the piles 130 cross in the shape of the figure "8", FIG. 15D shows another cross type in which the piles 130 are knitted in a simple cross, and FIG. 15E shows still another cross type in which the piles 130 cross in groups of two strands together (double cross).

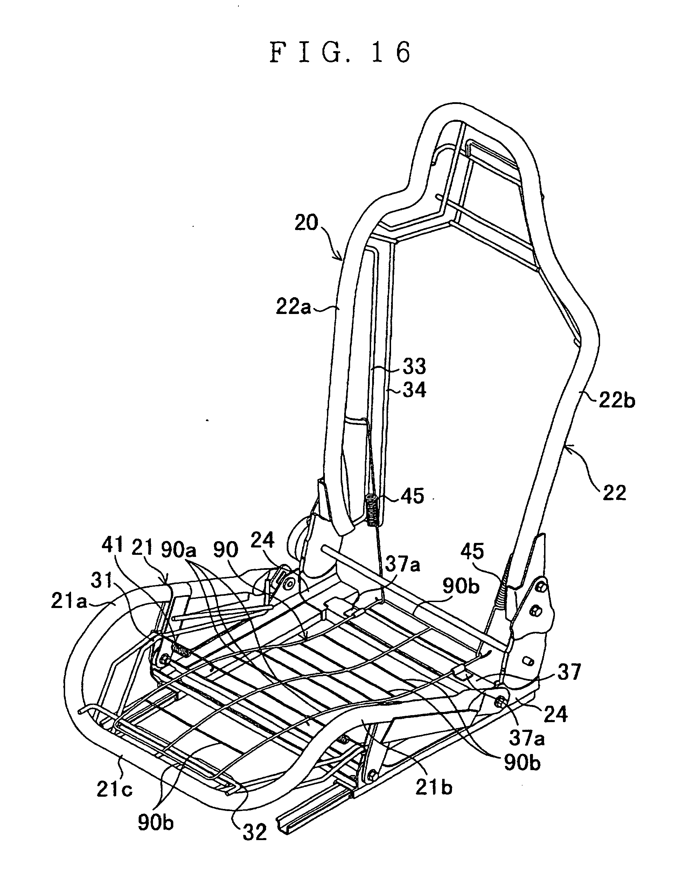

FIG. 16 to FIG. 20 are views for explaining other embodiments of the invention, and any of them is different from the above-described embodiment in the structure of the base member constituting the lower layer. More specifically, a base member 90 shown in FIG. 16 is composed of a reticulate body in which a plurality of longitudinal wires 90a and a plurality of lateral wires 90b are perpendicular to each other into a substantially rectangular lattice form in a plane view. The front portions of the longitudinal wires 90a are located on the third auxiliary frame member 32, and the rear parts of the longitudinal wires 90a on both sides are engaged with an engaging member 37a that is a bounce preventing means provided on a space keeping frame 37 between the slide frames 24 and 24. Further, one end of the metal spring 41, whose other end is engaged with the second auxiliary frame member 31, is engaged with the longitudinal wire 90a on either side. In addition, a portion in the vicinity of the boundary between the longitudinal wire 90a on either side and the lateral wire 90b disposed at the rear is engaged with one end of a metal spring 45 whose other end is engaged with the auxiliary frame member 33 located behind the back main frame 22 constituting the seat back part. As a result, the base member 90 is elastically supported to stroke in the lateral direction and the vertical direction, thus forming a flat-type elastic member which absorbs vibrations transmitted to the first net member 50 and the second net member 60 by stroking by imparted vibrations similarly to the base member 40 composed of the net member of a three-dimensional structure in the above-described embodiment.

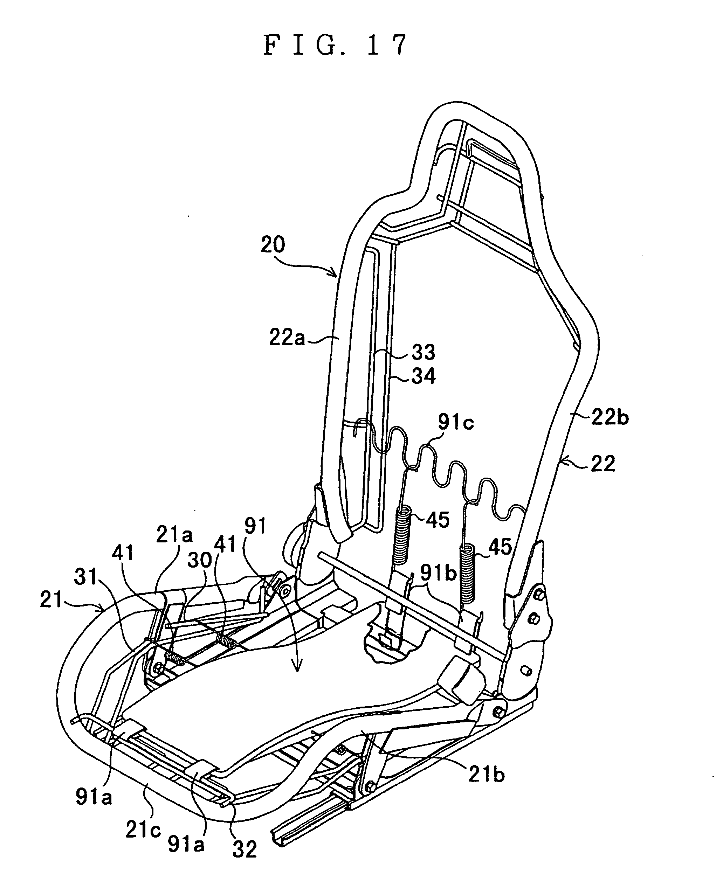

A base member 91 shown in FIG. 17 is composed of a plate-shaped body, and its front end is swingably engaged with the third auxiliary frame member 32 with hook members 91a. Further, the base member 91 is elastically supported by engaging ends of the metal springs 41, whose other ends are engaged with the first or second auxiliary frame member 30 or 31, with the rim portion of the base member 91 composed of the plate-shaped body, forming a flat-type elastic member. Furthermore, other hook members 91b are disposed at the rear, and ends of the metal springs 45, whose other ends are engaged with a wire member 91c running between the auxiliary frame members 33 constituting the seat back part, are engaged with the hook members 91b. As a result, as in the case of the above explanation, the base member 91 also strokes by vibrations to exhibit a vibration absorbing effect. Further, the base member 91 is, as shown in the drawing, fixed to the space keeping frame 37 with the hook members 91b as a bounce preventing means to suppress upward (thrusting the top) displacement, which prevents an occupant from bouncing up by the base member 91. The wire member 91c is formed not into a linear form but into a curved form with projections and depressions in the vertical direction in the drawing to be imparted a predetermined elastic force, and is disposed behind the back lining net member 80 to elastically support it.

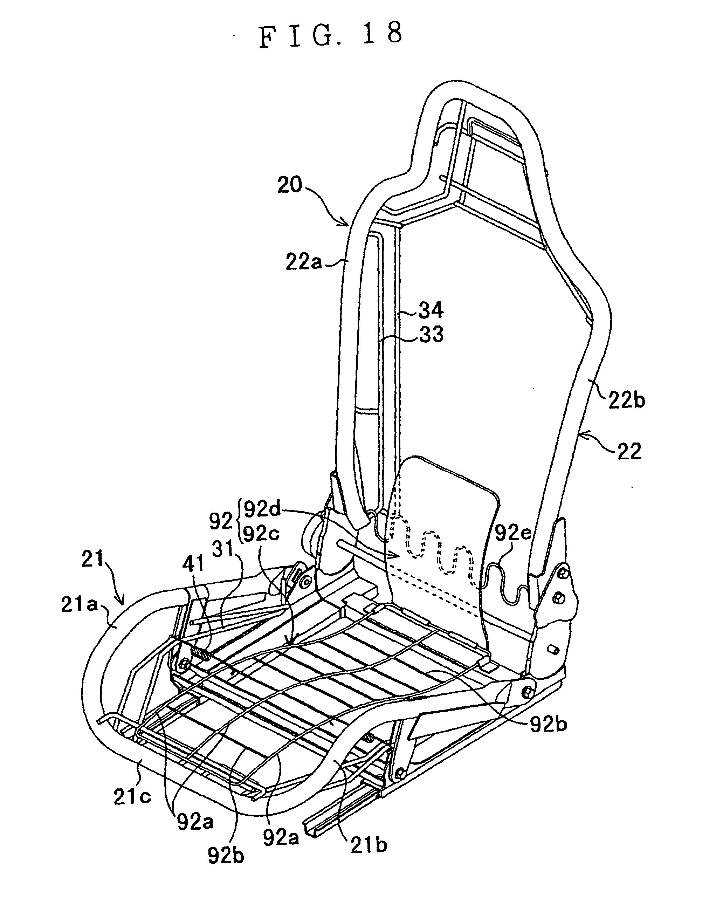

A base member 92 shown in FIG. 18 has a reticulate body part 92c in which longitudinal wires 92a and lateral wires 92b are arranged perpendicular to each other as in the above-described base member 90, and a plate-shaped body part 92d which supports the back lining net member 80 and has the same level as that of the lumbar is connected to the lateral wire 92b located at the rear. The reticulate body part 92c is elastically supported by the metal springs 41 with respect to the second auxiliary frame members 31. The plate-shaped body part 92d is elastically supported by a wire member 92e which is formed into a curved form with projections and depressions in the vertical direction, in the drawing, between the auxiliary frame members 33 constituting the seat back part to be imparted a predetermined elastic force.

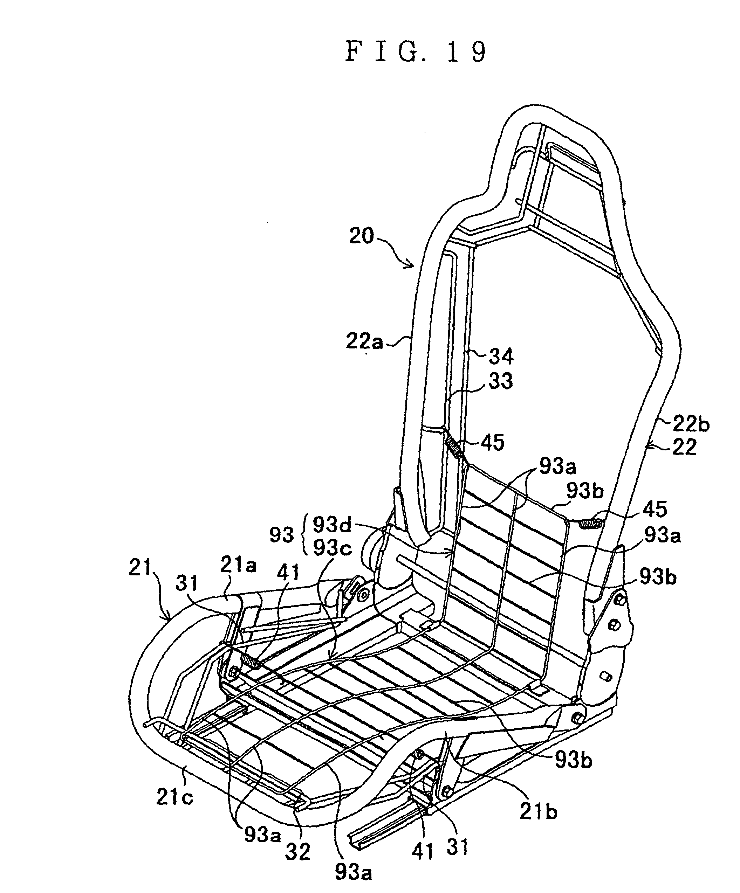

A base member 93 shown in FIG. 19 is composed of a first reticulate body part 93c in which longitudinal wires 93a and lateral wires 93b are arranged perpendicular to each other and which corresponds to the seat cushion part, and a second reticulate body part 93d which is disposed on the seat back side and has the same level as that of the lumbar. The first reticulate body part 93c is elastically supported on ends of the metal springs 41 whose other ends are engaged with the second auxiliary frame members 31. The second reticulate body part 93d is elastically supported on ends of the metal springs 45 whose other ends are engaged with the auxiliary frame members 33 constituting the seat back part.

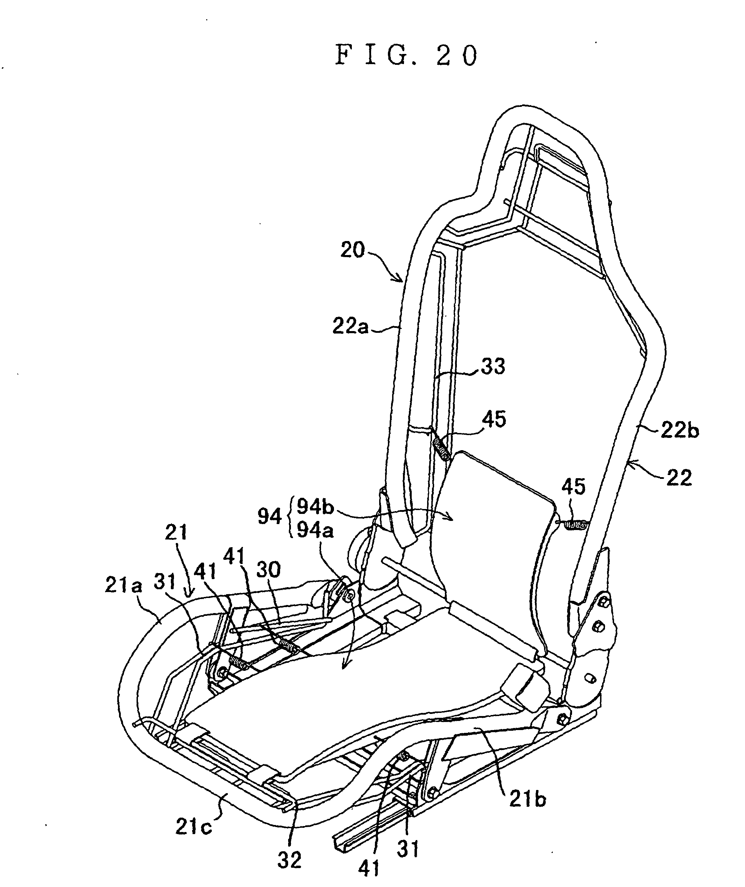

A base member 94 shown in FIG. 20 is composed of a plate-shaped body similarly to the base member shown in FIG. 17 but comprises a first plate-shaped body part 94a which is disposed corresponding to the seat cushion part and a second plate-shaped body part 94b which is disposed on the seat back part side and has the same level as that of the lumbar. The rim portion of the first plate-shaped body part 94a is elastically supported on ends of the metal springs 41 whose other ends are engaged with the first or second auxiliary frame member 30 or 31. The second plate-shaped body part 94b is elastically supported on ends of the metal springs 45 whose other ends are engaged with the auxiliary frame members 33 constituting the seat back part.

Next, data of various kinds of characteristics are explained, which were measured about the vehicle seat 10 shown in FIG. 1, that is, the vehicle seat 10 including the base member 40 composed of a net member of a three-dimensional structure, the first net member 50, the second net member 60, and the viscoelastic member 70 which is connected to and supported on the front end part 21c in the seat cushion part.

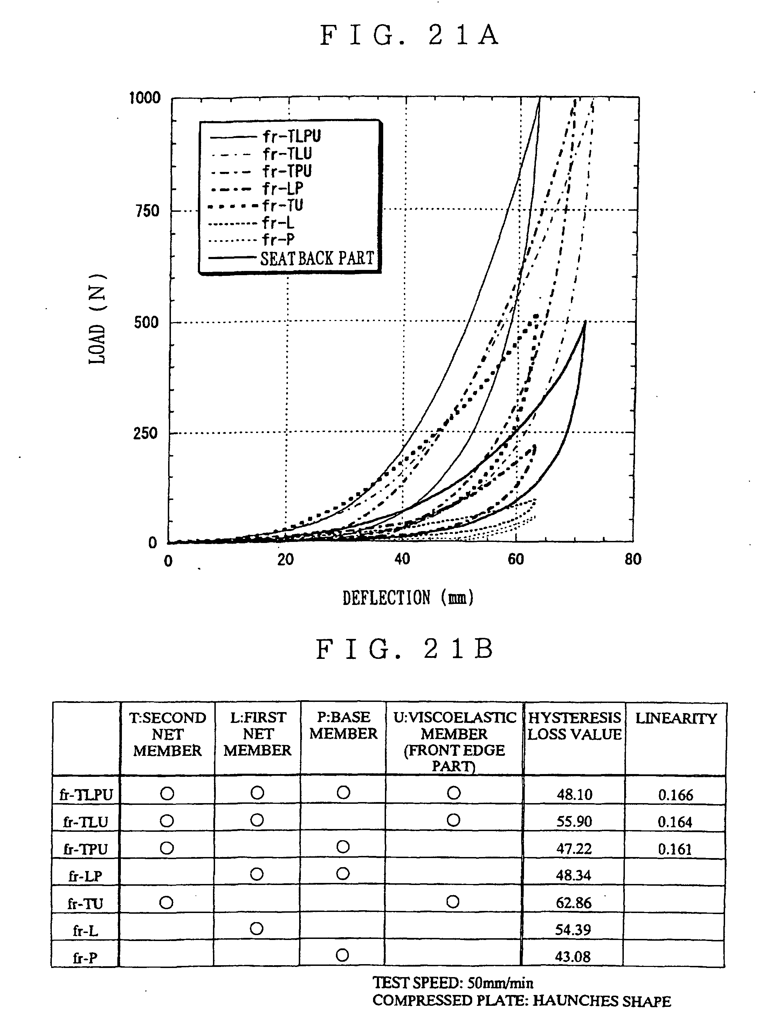

FIG. 21 A shows load-deflection curved lines showing static characteristics when a load is applied at a speed of 50 mm/min using a compressed plate in the shape of the haunches. In the drawing, a symbol T denotes the second net member 60, a symbol L the first net member 50, a symbol P the base member 40 composed of the net member of a three-dimensional structure, and a symbol U the viscoelastic member 70 connected to and supported on the front end frame member 21c respectively. As shown in FIG. 21B, "fr-TLPU" shows the seat cushion part of the vehicle seat 10 of the embodiment 1 including the second net member 60 : the symbol T, the first net member 50 : the symbol L, the base member 40 : the symbol P, and the viscoelastic net member 70 : the symbol U. The symbols "fr-TLU", "fr-TPU", "fr-LP", "fr-TU", fr-L", and "fr-P" show test examples which were measured without mounting one of the members constituting the vehicle seat 10 of the embodiment 1. For example, "fr-TLU" means a structure having the second net member 60, the first net member 50, and the viscoelastic member 70 without the base member 40. The case of "fr-TPU" means a structure having no first net member 50.

As is clear from FIG. 21A, the seat of the embodiment 1 has the lowest amount of deflection (sinking) against the load. In contrast to this, the cases of the test examples 1 and 2 which do not have either the base member 40 or the first net member 50 have larger amounts of deflection as compared with the embodiment. Accordingly, it can be understood that the base member 40 and the first net member 50 are effective in preventing unintended sinking to provide the feeling of stiffness.

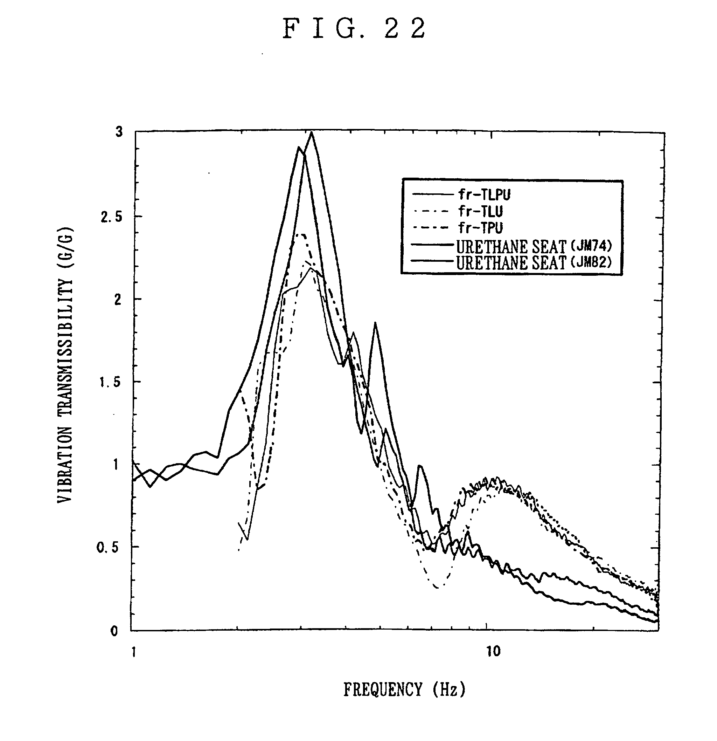

FIG. 22 is a graph of vibration transmissibility (G/G) obtained from the acceleration (0.3G) of a platform of a vibrator and the value of an accelerometer held on the head of a test subject where the subject having a weight of 58 kg sit on the vehicle seat and was vibrated by sine waves at a fixed acceleration of 0.3 G by means of the vibrator. The symbols "fr-TLPU" denotes the embodiment 1 similarly to the above explanation, and "fr-TLU" and "fr-TPU" denote the test examples 1 and 2 respectively. "Urethane seat (JM74)" shows data of a comparative example which was measured where a test subject having a weight of 74 kg sit on the previously known urethane seat (comparative example 1). "Urethane seat (JM82)" shows data of a comparative example which was measured where a test subject having a weight of 82 kg sit on the previously known urethane seat (comparative example 2).

As is clear from the drawing, any of them is low in resonance frequency, but the comparative examples 1 and 2 are high in vibration transmissibility at the resonance peak to be about 2.9 to about 3 (G/G). In contrast to this, in the case of the embodiment 1 and the test examples 1 and 2, it is suppressed to be low, about 2.1 to about 2.4 (G/G), exhibiting characteristics excellent in vibration absorption. Among them, the embodiment 1 has the lowest vibration transmissibility at the resonance peak and is thus excellent in vibration absorbing characteristics.

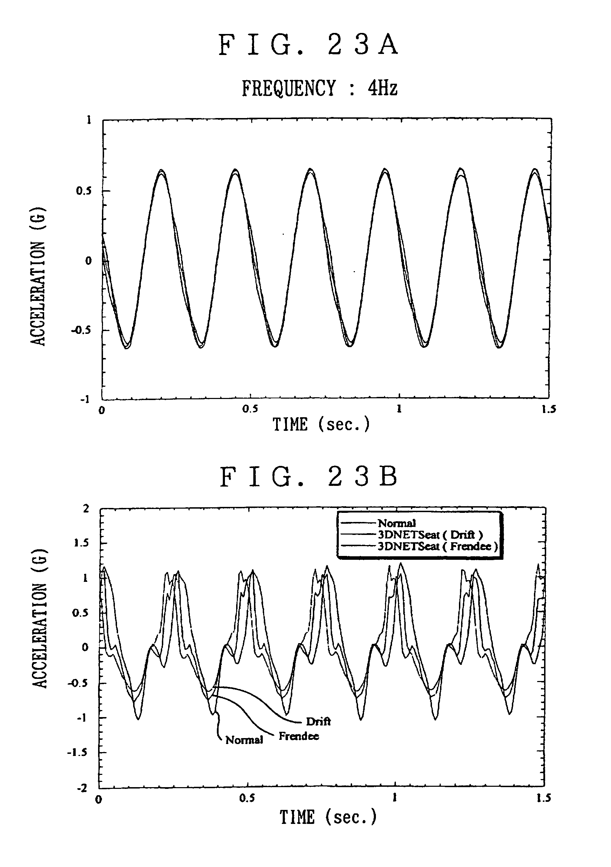

FIG. 23B is a graph showing characteristics to impact vibrations under the haunches investigated by measuring the acceleration at the seat cushion part when the seat is vibrated at a frequency of 4 Hz shown in FIG. 23A. The test subject had a weight of 58 kg. "3DNET Seat (Frendee)" shows the data of the above-described embodiment 1. "3DNET Seat (Drift)" shows the data of an aspect in which a flat plate-shaped net member composed of a net member of a three-dimensional structure is employed as the first net member 50 in place of that in the loop form of the embodiment 1 (embodiment 2). "Normal" shows the data of the previously known urethane seat (comparative example 3).

When the upward acceleration shown by a minus value becomes 1.3 G or more, the seated person usually bounces up. The comparative example 3 shows an acceleration of 1 G or more close to the above value, while that of the embodiment 1 and the embodiment 2 is 0.8 G or lower, and they are thus excellent in impact vibration characteristics.

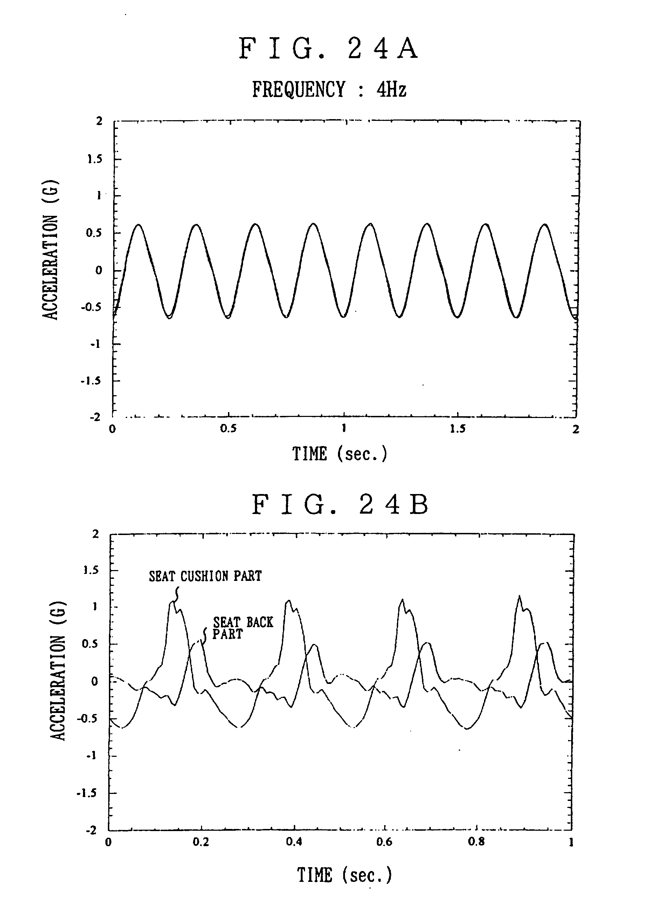

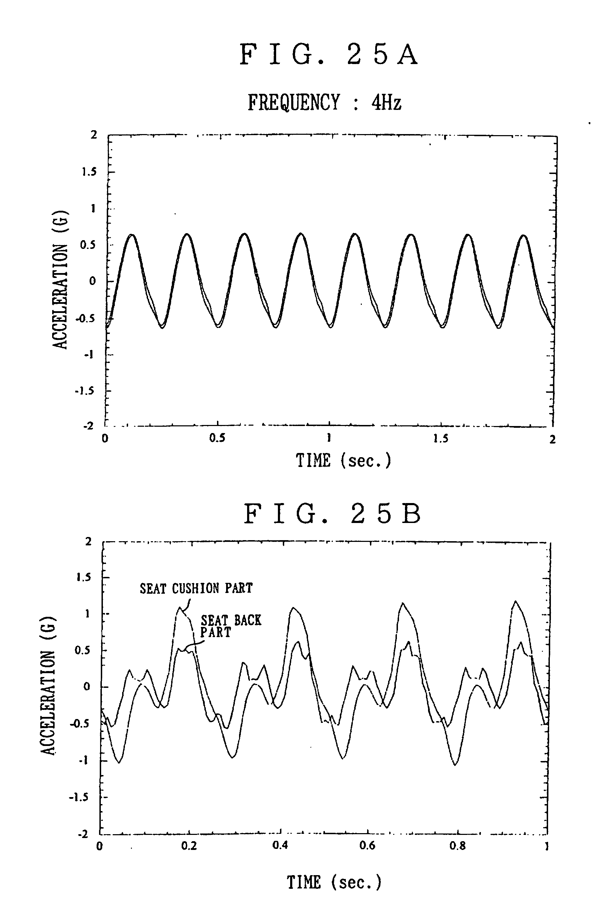

FIG. 24B shows data obtained by measuring the accelerations outputted at the seat back part and the seat cushion part when the vehicle seat of the embodiment 1 is vibrated at a frequency of 4 Hz shown in FIG. 24A. FIG. 25B shows data obtained by measuring the accelerations outputted at the seat back part and the seat cushion part when the vehicle seat composed of the previously known urethane seat is vibrated at a frequency of 4 Hz shown in FIG. 25A (comparative example 4). The test subject had a weight of 58 kg in either case.

From FIG. 24B, it is known that the output at the seat cushion part is phase delayed by 90 degrees as compared with the output at the seat back part in the case of the embodiment 1. More specifically, in the case of the embodiment 1, when the seat cushion part sinks down, the test subject does not greatly sinks toward the seat back part, and when the seat cushion part rises up, the subject does not feel a feeling of pushing-up from the seat back part, movements of the seat cushion part and the seat back part counterbalancing, so that the subject can keep a stable seating attitude. In contrast to this, in the case of the comparative example 4 in FIG. 25, it can be understood that the outputs at the seat cushion part and the seat back part substantially synchronize with each other, whereby the subject sinks deep into the seat back part and the seat cushion part, and both of them greatly push up as a reaction.

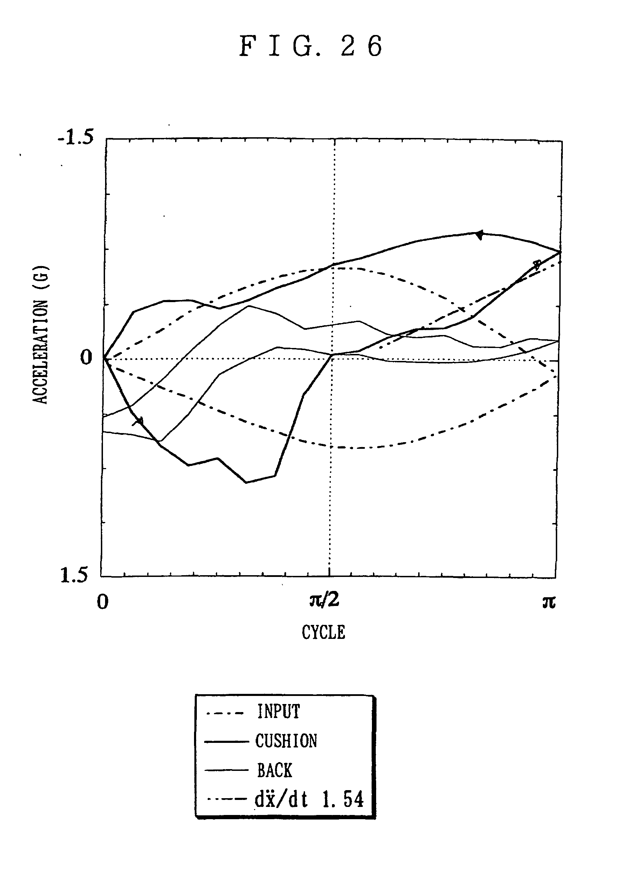

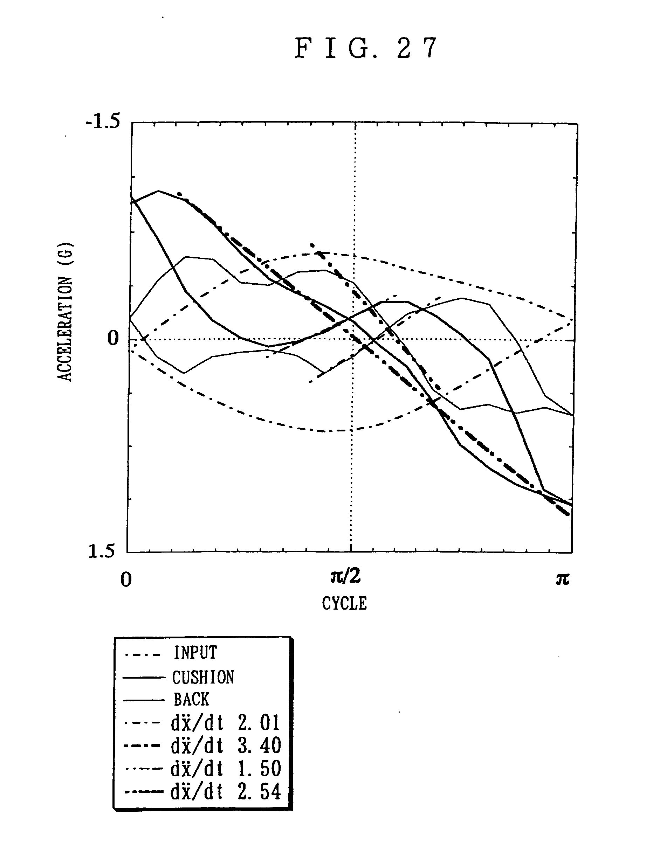

FIG. 26 is a view showing data of the embodiment 1 in FIG. 24 through the relation between cycle and acceleration, and FIG. 27 is a view showing data of the comparative example 4 in FIG. 25 through the relation between cycle and acceleration. In both of them, a differential value of the acceleration showing the correlation with sensitivity is obtained, in which the lower this value is, the greater the test subject feels a feeling of bounce. In the embodiment 1 in FIG. 26, there is only one point in one cycle from zero toward a negative where a feeling of bounce appears, and the differential value is 1.54. In the case of the comparative example 4 in FIG. 27, there are four points in one cycle where a feeling of bounce appears, and the differential values except for one point are more than that of the embodiment 1, and it can be understood that a great feeling of bounce happens more often than in the embodiment 1. It should be noted that the figure in FIG. 26 drawn by acceleration and cycle is similar to the figure drawn by damping characteristics by an oil damper.

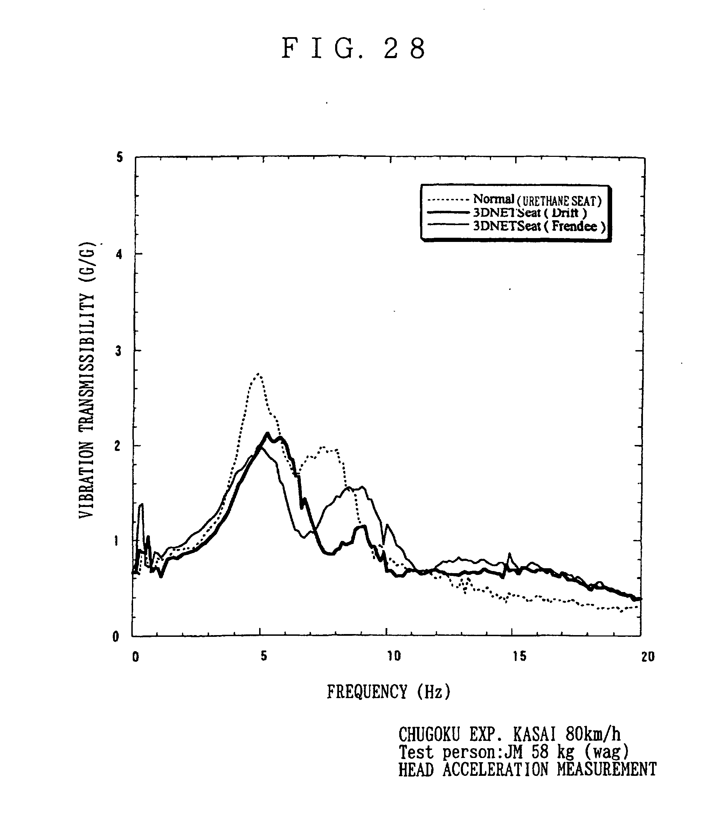

FIG. 28 is a graph showing results of vibration characteristics investigated by vibrating the seat by means of the vibrator based on random waves taken from driving at a speed of 80 km/h on Chugoku Expressway and mounting the accelerometer on the head of the test subject. The subject had a weight of 58 kg. Both of the embodiment 1 and the embodiment 2 have low resonance peaks as compared with that of the previously known urethane seat, and thus it can be understood that they exhibit excellent vibration absorbing characteristics. Further, since in the embodiment 1, the resonance peak exists in a region of frequency lower than that of the embodiment 2, the embodiment 1 is slightly better than the embodiment 2 in damping property, and the embodiment 2 is slightly better than the embodiment 1 in spring property.

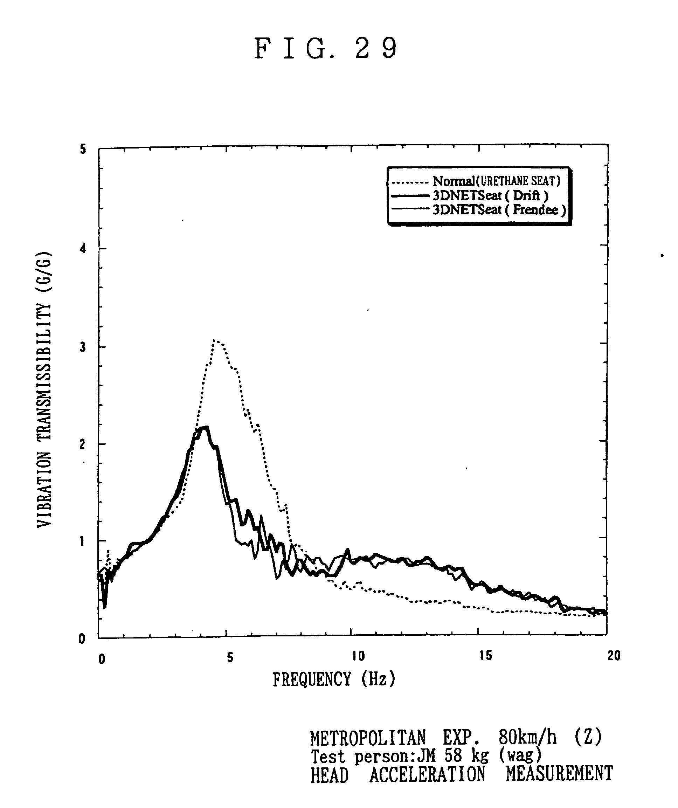

FIG. 29 is a graph showing results of the same experiment as in the case of FIG. 28 which was carried out based on random waves taken from driving at a speed of 80 km/h on Metropolitan Expressway. The test subject similarly had a weight of 58 kg. When the embodiment 1 and the embodiment 2 are compared, there is no significant difference. Their resonance peaks, however, lower when compared with the urethane seat, and thus it can be understood that the seats of the embodiments 1 and 2 are excellent in vibration absorbing characteristics.

As has been described, the vehicle seat of the present invention is formed in a three-layered structure including the base member constituting the lower layer which is supported through the metal springs, the first net member of a three-dimensional structure which is disposed above the base member to constitute the middle layer, and the second net member of a three-dimensional structure which is disposed to cover the first net member to constitute the upper layer and is stretched with a tension lower than that of the first net member. Accordingly, the base member can stroke by vibrations to absorb them, and the feeling of stiffness can be provided by the first net member. Further, excellent body weight pressure dispersion characteristics, vibration absorbing characteristics, impact absorbing characteristics and the like which the net member of a three-dimensional structure itself owns are exhibited more effectively than in the previous case, decreasing the feeling of bounce, so that the body of the seated person can be stably supported. Further, the viscoelastic member is disposed to decrease the feeling of touch with the seat frame, thereby improving the feeling of supporting the human body.

While preferred embodiments of the invention have been described with a certain degree of particularity with reference to the drawings, obvious modifications and variations are possible in light of the above teachings. The scope of the invention is to be determined from the claims appended thereto.

## Claims

1. A vehicle seat (10), comprising:
a base member (40) elastically connected to and supported on any of frame members (30, 31) arranged separately in a width direction of a seat frame (20), through metal springs (41) for absorbing vibrations coming from a vehicle floor, to constitute a lower layer;
a first net member (50) of a three-dimensional structure, in which a front mesh layer and a back mesh layer are connected by a large number of piles, stretched above said base member and between the frame members for providing a feeling of stiffness by its reaction force to stably hold a seated person, to constitute a middle layer; and
a second net member (60) of a three-dimensional structure, in which a front mesh layer and a back mesh layer are connected by a large number of piles, disposed to cover the top of said middle layer and stretched with a tension lower than that of said first net member constituting said middle layer for accommodating the weight of a person to be seated, to constitute an upper layer.

2. The vehicle seat according to claim 1, wherein said base member is located between frame members (30, 31) constituting a seat cushion part which are arranged separately in the width direction of the seat frame, and said metal spring runs between each frame member and each side portion of said base member.

3. The vehicle seat according to claim 2, wherein said base member is further elastically supported hung through a metal spring engaged with any of frame members (22) constituting a seat back part of the seat frame.

4. The vehicle seat according to claim 1, wherein said base member is connected to means (37a) for preventing bounce upward.

5. The vehicle seat according to claim 1, wherein said base member is a substantially flat-type elastic member.

6. The vehicle seat according to claim 5, wherein the substantially flat-type elastic member constituting said base member is a net member of a three-dimensional structure in which a front mesh layer and a back mesh layer are connected by a large number of piles.

7. The vehicle seat according to claim 1, wherein said first net member constituting said middle layer is stretched in loop form between the frame members arranged separately in the width direction.

8. The vehicle seat according to claim 1, wherein a viscoelastic member (70) is inserted between a part of said first net member constituting said middle layer covering the frame member and said second net member constituting said upper layer, or between said first net member constituting said middle layer and the frame member around which said first net member is wound.

9. The vehicle seat according to claim 8, wherein said viscoelastic member is formed into a structure having a plurality of divided block parts (70b) with one or more boundary parts (70a), which are processed thin in thickness, intervening therebetween.

10. The vehicle seat according to claim 8, wherein said viscoelastic member is formed including viscoelastic polyurethane, or is formed including a net member of a three-dimensional structure, in which a front mesh layer and a back mesh layer are connected by a large number of piles, formed into a structure having a plurality of divided block parts (70b) with one or more boundary parts (70a), which are processed thin in thickness, intervening therebetween.

11. The vehicle seat according to claim 8, wherein said viscoelastic member is formed including a net member (72) of a three-dimensional structure, in which a front mesh layer and a back mesh layer are connected by a large number of piles, formed into a structure having a plurality of divided block parts (72b) with one or more boundary parts (72a), which are processed thin in thickness, intervening therebetween, and viscoelastic polyurethan (71) which is integrally joined to one face of the net member of a three-dimensional structure.

12. The vehicle seat according to claim 8, wherein said viscoelastic member is formed including a net member (74, 75) of a three-dimensional structure, in which a front mesh layer and a back mesh layer are connected by a large number of piles, formed into a structure having a plurality of divided block parts (74b, 75b) with one or more boundary parts (74a, 75a), which are processed thin in thickness, intervening therebetween, and an elastic base member (73) to either face of which the net member of a three-dimensional structure is integrally joined.

13. The vehicle seat according to any one of claims 1 to 12, wherein a viscoelastic member which is connected to and supported on any of the frame members (21c, 22c) forming the seat frame is further disposed at one or both of a front edge portion of the seat cushion part and a lumbar supporting part and below said second net member forming said upper layer.

14. The vehicle seat according to claim 13, wherein only one end of said viscoelastic member disposed on the front edge portion of the seat cushion part is connected to and supported on any of the frame members (21c) disposed at the front end of the seat frame for the seat cushion part.

## Patentansprüche

1. Fahrzeugsitz (10) umfassend:
ein Basisteil (40), das durch Metallfedern (41) zur Absorption von Vibrationen, die von einem Fahrzeugboden kommen, elastisch verbunden ist mit und gehalten ist an jedem der Rahmenteile (30, 31), die separat voneinander in einer Breitenrichtung eines Sitzrahmens (20) angeordnet sind, zur Ausbildung einer unteren Schicht; ein erstes Netzteil (50) einer dreidimensionalen Struktur mit einer vorderen Maschenlage und einer hintere Maschenlage, die durch eine große Anzahl von Stapeln verbunden sind, das sich über dem Basisteil und zwischen den Rahmenteilen zur Bereitstellung eines Gefühls von Steifheit durch seine Reaktionskraft erstreckt, um eine zu setzende Person stabil zu halten, zur Ausbildung einer mittleren Schicht; und
ein zweites Netzteil (60) einer dreidimensionalen Struktur mit einer vorderen Maschenlage und einer hinteren Maschenlage, die durch eine große Anzahl von Stapeln verbunden sind, das so angeordnet ist, dass es die Oberseite der mittleren Lage abdeckt und sich mit einer Spannung erstreckt, die niedriger als die des ersten Netzteils ist, das die mittlere Lage ausbildet, um das Gewicht einer zu setzenden Person aufzunehmen, zur Ausbildung einer oberen Lage.

2. Fahrzeugsitz gemäß Anspruch 1, wobei das Basisteil zwischen den Rahmenteilen (30, 31) angeordnet ist, die einen Sitzkissenbereich ausbilden und separat in der Breitenrichtung des Sitzrahmens angeordnet sind, und sich die Metallfeder zwischen jedem Rahmenteil und jedem Seitenbereich des Basisteils erstreckt.

3. Fahrzeugsitz gemäß Anspruch 2, wobei das Basisteil weiterhin elastisch durch Aufhängung mit einer Metallfeder, die mit jedem der Rahmenteile (22) in Eingriff steht, die einen Sitzrückenteil des Sitzrahmens ausbilden, gehalten ist.

4. Fahrzeugsitz gemäß Anspruch 1, wobei das Basisteil mit Mitteln (37a) zur Verhinderung eines nach oben Springens verbunden ist.

5. Fahrzeugsitz gemäß Anspruch 1, wobei das Basisteil ein im Wesentlichen flaches, elastisches Element ist.

6. Fahrzeugsitz gemäß Anspruch 5, wobei das im Wesentlichen flache, elastische Element, das das Basisteil ausbildet, ein Netzelement einer dreidimensionalen Struktur ist, in der eine vordere Maschenlage und eine hintere Maschenlage durch eine große Anzahl von Stapeln miteinander verbunden sind.

7. Fahrzeugsitz gemäß Anspruch 1, wobei das erste Netzteil, das die mittlere Lage ausbildet, sich in einer Schleifenform zwischen den Rahmenteilen erstreckt, die separat in der Breitenrichtung angeordnet ist.

8. Fahrzeugsitz gemäß Anspruch 1, wobei ein viskoelastisches Teil (70) zwischen einem Teil des ersten Netzteils, das die mittlere Lage ausbildet und das Rahmenteil abdeckt, und dem zweiten Netzteil, das die obere Schicht ausbildet, eingebracht wird, oder zwischen dem ersten Netzteil, das die mittlere Lage ausbildet und dem Rahmenteil, um das das erste Netzteil gewunden ist.

9. Fahrzeugsitz gemäß Anspruch 8, wobei das viskoelastische Teil in eine Struktur geformt ist, die eine Vielzahl von geteilten Blockteilen (70b) aufweist, mit einem oder mehreren Grenzteilen (70a), die dünn in ihrer Dicke ausgeführt sind und die dazwischen angeordnet sind.

10. Fahrzeugsitz gemäß Anspruch 8, wobei das viskoelastische Teil, das viskoelastisches Polyurethan umfassend geformt ist oder ein Netzteil einer dreidimensionalen Struktur, in der eine vordere Maschenlage und eine hintere Maschenlage durch eine große Anzahl von Stapeln verbunden sind, umfassend geformt ist, in eine Struktur geformt ist, die eine Vielzahl von geteilten Blockteilen (70b) aufweist und eines oder mehrere Grenzteile (70a), die dünn in ihrer Dicke ausgeführt sind und dazwischen angeordnet sind.

11. Fahrzeugsitz gemäß Anspruch 8, wobei das viskoelastische Teil, das mit einem Netzteil (72) einer dreidimensionalen Struktur ausgeformt ist, in der eine vordere Maschenlage und eine hintere Maschenlage durch eine große Anzahl von Stapeln verbunden sind, in eine Struktur geformt ist, die eine Vielzahl von geteilten Blockteilen (72b) aufweist und eines oder mehrere Grenzteile (72a), die in ihrer Dicke dünn ausgeführt sind und die dazwischen angeordnet sind, und viskoelastisches Polyurethan (71), das integral mit einer Vorderfläche des Netzteils der dreidimensionalen Struktur verbunden ist.

12. Fahrzeugsitz gemäß Anspruch 8, wobei das viskoelastische Teil, das mit einem Netzteil (74, 75) einer dreidimensionalen Struktur geformt ist, bei der eine vordere Maschenlage und eine hintere Maschenlage durch eine große Anzahl von Stapeln verbunden sind, in eine Struktur geformt ist, die eine Vielzahl von geteilten Blockteilen (74b, 75b) aufweist und ein oder mehrere Grenzteile (71a, 75a), die in ihrer Dicke dünn ausgeführt sind und die dazwischen angeordnet sind, und ein elastisches Basisteil (73) an jeder Stirnfläche, mit der das Netzteil der dreidimensionalen Struktur integral verbunden ist.

13. Fahrzeugsitz gemäß einem der Ansprüche 1 bis 12, wobei ein viskoelastisches Teil, das verbunden ist mit und gehalten ist an einem der Rahmenteile (21c, 22c), die den Sitzrahmen ausformen, weiterhin angeordnet ist an entweder einem vorderen Randbereich des Sitzkissenbereichs und/oder einem Lendenunterstützungsteil oder unter dem zweiten Netzteil, das die obere Schicht ausbildet.

14. Fahrzeugsitz gemäß Anspruch 13, wobei nur ein Ende des viskoelastischen Teils an dem vorderen Endbereich des Sitzkissenteils verbunden ist mit und gehalten ist von einem der Rahmenteile (21c), die an dem vorderen Ende des Sitzrahmens für das Sitzkissenteil vorgesehen ist.

## Revendications

1. Siège (10) de véhicule, comprenant :
un élément de base (40) relié et porté élastiquement par l'un quelconque d'éléments (30, 31) d'armature disposés séparément dans une direction de la largeur d'une armature (20) de siège, au moyen de ressorts (41) en métal destinés à absorber les vibrations provenant d'un plancher de véhicule, de manière à constituer une couche inférieure ;
un premier élément (50) de filet de structure tridimensionnelle, dans lequel une couche de maillage antérieure et une couche de maillage postérieure sont reliées par un grand nombre de colonnes, étirées au-dessus dudit élément de base et entre les éléments d'armature de manière à apporter une sensation de rigidité par leur force de réaction pour maintenir stable une personne assise, afin de constituer une couche intermédiaire ; et
un deuxième élément (60) de filet de structure tridimensionnelle, dans lequel une couche de maillage antérieure et une couche de maillage postérieure sont reliées par un grand nombre de colonnes, disposées de manière à recouvrir le dessus de ladite couche intermédiaire et étirées avec une tension inférieure à celle dudit premier élément d'armature constituant ladite couche intermédiaire, pour s'adapter au poids d'une personne devant s'asseoir, afin de constituer une couche supérieure.

2. Siège de véhicule selon la revendication 1, dans lequel ledit élément de base est placé entre les éléments (30, 31) d'armature constituant un élément de coussin de siège, qui sont disposés séparément dans la direction de la largeur de l'armature de siège, et lesdits ressorts en métal se trouvent entre chaque élément d'armature et chaque partie latérale dudit élément de base.

3. Siège de véhicule selon la revendication 2, dans lequel ledit élément de base est en outre porté élastiquement en suspension au moyen d'un ressort en métal engagé avec l'un quelconque des éléments (22) d'armature, constituant un élément postérieur de siège de l'armature du siège.

4. Siège de véhicule selon la revendication 1, dans lequel ledit élément de base est relié à un moyen (37a) destiné à empêcher un rebondissement vers le haut.

5. Siège de véhicule selon la revendication 1, dans lequel ledit élément de base est un élément élastique sensiblement de type plat.

6. Siège de véhicule selon la revendication 5, dans lequel l'élément élastique sensiblement de type plat constituant ledit élément de base est un élément de filet de structure tridimensionnelle dans lequel une couche de maillage antérieure et une couche de maillage postérieure sont reliées par un grand nombre de colonnes.

7. Siège de véhicule selon la revendication 1, dans lequel ledit premier élément de filet constituant ladite couche intermédiaire est étiré en forme de boucle entre les éléments d'armature disposés séparément dans la direction de la largeur.

8. Siège de véhicule selon la revendication 1, dans lequel un élément viscoélastique (70) est inséré entre une partie dudit premier élément de filet constituant ladite couche intermédiaire recouvrant l'élément d'armature et ledit deuxième élément de filet constituant ladite couche supérieure, ou entre ledit premier élément de filet constituant ladite couche intermédiaire et l'élément d'armature autour duquel ledit premier élément de filet est enroulé.

9. Siège de véhicule selon la revendication 8, dans lequel ledit élément viscoélastique est constitué par une structure comportant une pluralité d'éléments de blocs (70b) divisés par une ou plusieurs parties limites (70a), qui sont d'épaisseur réduite par traitement, intervenant entre eux.

10. Siège de véhicule selon la revendication 8, dans lequel ledit élément viscoélastique est constitué en comprenant du polyuréthanne viscoélastique, ou est formé en comportant un élément de filet de structure tridimensionnelle, dans lequel une couche de maillage antérieure et une couche de maillage postérieure sont reliées par un grand nombre de colonnes, formé selon une structure comportant une pluralité d'éléments de blocs (70b) divisés par une ou plusieurs parties limites (70a), qui sont d'épaisseur réduite par traitement, intervenant entre eux.

11. Siège de véhicule selon la revendication 8, dans lequel ledit élément viscoélastique est formé en comportant un élément (72) de filet de structure tridimensionnelle, dans lequel une couche de maillage antérieure et une couche de maillage postérieure sont reliées par un grand nombre de colonnes, formé selon une structure comportant une pluralité d'éléments de blocs (72b) divisés par une ou plusieurs parties limites (72a), qui sont d'épaisseur réduite par traitement, intervenant entre eux, et de polyuréthanne viscoélastique (71) qui est intégré en une seule pièce dans une face de l'élément de filet de structure tridimensionnelle.

12. Siège de véhicule selon la revendication 8, dans lequel ledit élément viscoélastique est formé en comportant un élément (74, 75) de filet de structure tridimensionnelle, dans lequel une couche de maillage antérieure et une couche de maillage postérieure sont reliées par un grand nombre de colonnes, formé selon une structure comportant une pluralité d'éléments de blocs (74b, 75b) divisés par une ou plusieurs parties limites (74a, 75a), qui sont d'épaisseur réduite par traitement, intervenant entre eux, et d'un élément (73) de base élastique sur une ou l'autre face de laquelle l'élément de filet de structure tridimensionnelle est intégré en une seule pièce.

13. Siège de véhicule selon l'une quelconque des revendications 1 à 12, dans lequel un élément viscoélastique qui est relié à et porté par l'un quelconque des éléments (21c, 22c) d'armature formant l'armature de siège est en outre disposé à l'une ou aux deux d'une partie de bord antérieur de l'élément de coussin de siège et d'une partie de support des lombes et au-dessous d'un deuxième élément de filet formant ladite couche supérieure.

14. Siège de véhicule selon la revendication 13, dans lequel seule une extrémité dudit élément viscoélastique disposé sur la partie de bord antérieur de l'élément de coussin de siège est reliée à et portée par l'un quelconque des éléments (21c) d'armature disposés à l'extrémité antérieure de l'armature de siège pour l'élément de coussin de siège.
